Europäisches Patentamt

**European Patent Office**

**Office européen des brevets**

(11) Veröffentlichungsnummer: **0 325 677 B1**

(12) **EUROPÄISCHE PATENTSCHRIFT**

(45) Veröffentlichungstag der Patentschrift: **19.05.93**

(51) Int. Cl.5: **G06F 9/38**

(21) Anmeldenummer: **88102542.3**

(22) Anmeldetag: **22.02.88**

(54) **Schaltungsanordnung und Steuerverfahren eines Befehlspufferspeichers in einer Datenverarbeitungsanlage.**

(30) Priorität: **25.01.88 DE 3802025**

(43) Veröffentlichungstag der Anmeldung:
**02.08.89 Patentblatt 89/31**

(45) Bekanntmachung des Hinweises auf die
Patenterteilung:
**19.05.93 Patentblatt 93/20**

(84) Benannte Vertragsstaaten:
**AT CH ES FR GB IT LI NL SE**

(56) Entgegenhaltungen:
**EP−A− 0 118 828**
**EP−A− 0 199 946**
**US−A− 4 566 063**

**PATENT ABSTRACTS OF JAPAN vol. 7, no. 109 (P−196)12. Mai 1983**

**PATENT ABSTRACTS OF JAPAN vol. 6, no. 116 (P−125)29. Juni 1982**

**P. M. KOGGE 'The Architecture of Pipelined Computers' 1981 , MC GRAW−HILL , NEW YORK, US**

(73) Patentinhaber: **Müller, Otto**
**Am Guckenbühl 10**
**W− 7750 Konstanz 16(DE)**

(72) Erfinder: **Müller, Otto**
**Am Guckenbühl 10**
**W− 7750 Konstanz 16(DE)**

(74) Vertreter: **Hanewinkel, Lorenz, Dipl.− Phys.**
**Patentanwalt Ferrariweg 17a**
**W− 4790 Paderborn (DE)**

**Beschreibung**

Die Erfindung betrifft eine Schaltungsanordnung und ein Steuerverfahren eines Befehlspufferspeichers in einer Datenverarbeitungsanlage, der bezüglich seiner Befehlswortkapazität zyklisch betrieben wird, wobei diesem, gesteuert von einer Ladezeigeradresse, die jeweils um maximal eine vorgegebene Differenz gegenüber einer, entsprechend einem Programmablauf laufend zu erhöhenden, Befehlsadresse dieser vorauseilend erhöht wird, Befehlsworte aus einem Hauptspeicher in den Befehlspufferspeicher nacheinander eingeladen werden, aus dem die Befehle, durch die Befehlsadresse jeweils später adressiert, einem Befehlsentschlüßler zu einer Ausführung zugeführt werden, und bei dem der Befehlspufferspeicher einen Befehlsrücklagespeicher enthält, in dem nacheinander eingeladene, bereits ausgeführte oder übersprungene Befehlsworte verbleiben, und bei dem eine im Programmablauf in einem Befehlsadreßteil eines Verzweigungsbefehls auftretende Verzweigungsadresse mit einem jeweiligen Adressenbereich verglichen wird, der jeweils zu den im Befehlspufferspeicher enthaltenen, nämlich vorausgeladenen und zurückgelegten, Befehlsworten gehört, und, falls die Verzweigungsadresse in dem genannten Adressenbereich liegt, der durch diese adressierte Befehle aus dem Befehlspufferspeicher abgerufen wird und, falls die Verzweigungsadresse außerhalb des genannten Adressenbereichs liegt, die Verzweigungsadresse dem Hauptspeicher zugeführt wird und der genannte Adressenbereich gelöscht wird.

In Z. Computer Design, 1.Aug.1987, S.89 – 94, "Maximized Performance by Choosing Best Memory", ist eine Übersicht über sämtliche bekannten Cachespeicheranordnungen und deren Steuerverfahren gegeben.

Aus US – PS 36 11 315 ist es bekannt, in einer programmgesteuerten Datenverarbeitungsanlage, deren Programm in einem Hauptspeicher zusammen mit Ein – und Ausgangsdaten eines Prozessors gespeichert ist, Befehlsfolgen des Programmes, die jeweils zur Ausführung anstehen, aus dem Hauptspeicher blockweise in einen Pufferspeicher mit kürzerer Zugriffszeit zu übertragen und von diesem aus einem Befehlsdekodierer zuzuführen, wobei jeweils die Befehlsadresse eines zur Ausführung anstehenden Befehls mit dem Adressenbereich der im Pufferspeicher jeweils enthaltenen Befehle verglichen wird und, sofern der zu adressierende Befehl nicht im Pufferspeicher enthalten ist, dieser gesuchte Befehl mit einer zugehörigen Befehlsfolge der Länge eines Blocks aus dem Hauptspeicher in einen Block des Pufferspeichers geladen wird und, nachdem der Befehl dorthin geladen ist, dort adressiert und dem Befehlsentschlüßler zugeführt wird und dann zur Ausführung kommt, wobei die weitere Befehlsentnahme entsprechend geschieht, nachdem eine nächste Befehlsadresse durch programmabhängiges Verändern eines Befehlszählerstandes gewonnen wird. Diese Schaltung hat den Nachteil, daß die Befehlsfolgen blockweise umgeladen werden, wozu eine bestimmte Übertragungszeit je nach der Blockgröße benötigt wird, so daß häufig Wartezeiten entstehen, die für die Übertragung für im Einzelfall eines Ablaufes oft nicht benötigter Befehle, die auf den Block vor dem gesuchten Befehl stehen oder hinter einer Verzweigung des Programms auf einen Befehl außerhalb des Blocks stehen, verbraucht wird. Hinzu kommt, daß während der Übertragung socher jeweils nicht benötigter Befehle notwendige Datenzugriffe zum Hauptspeicher behindert werden.

Es ist weiterhin aus Z. Computer Design, Vol. 21, April 1982, S.63,64 bekannt, zur Verringerung der mittleren Wartezeiten bei einem Befehlszugriff, jeweils eine bestimmte Anzahl von Befehlen, die nach einem jeweils auszuführenden Befehl gespeichert sind, bereits vorzeitig in einen Vorgriffs-Befehlspufferspeicher zu übertragen, aus dem sie dann zur Befehlsdekodierung abgerufen werden. Sofern jedoch eine Programmverzweigung erfolgt, tritt eine Wartezeit durch einen erneuten Hauptspeicherzugriff auf, und der Hauptspeicher wird durch das weitere Vorausladen belastet, was parallel notwendige Datenzugriffe behindert. Dies ist insbesonders dann ein großer Nachteil, wenn Programme in Schleifen mehrfach oder zyklisch durchlaufen werden, wobei die Befehle immer wieder neu aus dem Hauptspeicher mit entsprechender Zugriffsbelastung zu entnehmen sind, da jedesmal bei der Verzweigung zum Anfangspunkt der Schleife eine Ladeverzögerung im Programmablauf durch Übernahme der ersten Befehle des Programmabschnittes auftritt.

Aus EP – A – 0 199 946 ist eine Vorrichtung bekannt, deren Befehlspufferspeicher ein Ladezeigerregister und ein zweites Zeigerregister zugeordnet ist, mit denen jeweils die vorausgeladenen Befehle und die bereits zurückgelegten Befehle bestimmt sind, so daß bei Vorliegen eines Verzweigungsbefehles in den vorausgeladenen oder mit zurückgelegten Befehlen geladenen Pufferspeicherbereich diese Verzweigung unmittelbar ausgeführt wird. Hierbei ist dieser Rücklagepufferspeicher mit dem Vorgriffspufferspeicher zu einem Befehlspufferspeicher vereinigt, so daß beide in einem zyklischen Betrieb mit gemeinsamen Ansteuermitteln betrieben werden. Der Befehlspufferspeicher ist von dem Registersatz, der den Dateneingängen des Rechenwerkes vorgeschaltet ist, getrennt, so daß jeweils gleichzeitig ein neuer Befehl abgerufen und eine Operation mit Daten ausgeführt wird. Die Entlastung des Hauptspeichers von Befehlszugriffen wirkt sich insbes. dann vorteilhaft aus, wenn der Hauptspeicher seitenweise organisiert ist, wobei die Seitenwahl längere Seitenwechselzeiten hat als eine Seitenzugriffszeit auf einer Seite selbst dauert. Bei handelsüblichen Speichern beträgt dieses Verhältnis der Zugriffszeiten etwa 4 zu 1. Da die Daten und Befehle i.a. auf verschiedenen Seiten zu bearbeiten sind, entfällt dementsprechend jeweils ein Seitenwechsel, wenn die Befehle aus dem Pufferspeicher und nicht aus dem Hauptspeicher entnommen werden.

Es ist weiterhin bekannt, dem Hauptspeicher insbesondere wegen seiner langen Seitenzugriffszeit, die mehreren Maschinentaktzyklen entspricht, eine sogenannte Pipeline für die Zieladressen der aus dem Hauptspeicher angeforderten und erst später herauskommenden Informationen zuzuordnen.

Es ist Aufgabe der Erfindung, die vorbekannte Befehlspufferspeicher – Schaltungsanordnung und ein Verfahren zum Betrieb derselben dahingehend zu verbessern, daß die Anzahl der Ladeverzögerungen in einem Programmablauf und die Zugriffsbelastung des Hauptspeichers durch Minderung der Zahl der Befehlsübertragungen in den Befehlspufferspeicher verringert wird.

Die Lösung der Aufgabe besteht darin, daß von der Ladezeigeradresse mindestens die zur Befehlspufferspeicher – Adressierung notwendigen Adreßstellen einer Adreßpipeline jeweils zugeführt werden, und von der Adreßpipeline diese genannten Adreßstellen nach einer Verzögerung, die jeweils der Zeit entspricht, in der eine Speicherzugriff – Steuervorrichtung in der gegebenen Adreßfolge die Speicherzugriffe durchführt, als eine Pufferspeicherschreibadresse dem Pufferspeicher zugeführt werden, und daß jeweils bei dem Vergleich der Verzweigungsadresse mit dem Adreßbereich der im Befehlspufferspeicher bereits enthaltenen vorausgeladenen Befehlsworte außerdem die in der Adreßpipeline gespeicherten Befehlswortadressen in den Vergleich einbezogen werden und, falls eine der Verzweigungsadresse entsprechende Adresse in der Adreßpipeline vorhanden ist, die Dekodierung des zugehörigen Befehls dann ausgeführt wird, sobald das ensprechende Befehlswort in den Befehlspufferspeicher eingeladen ist.

Vorteilhafte Ausgestaltungen sind in den Neben – und Unteransprüchen angegeben.

Die aus dem Hauptspeicher kommenden Informationen, deren Zieladressen die Pipeline durchlaufen haben, werden bei der erfindungsgemäßen Anordnung mit von dem Datenregistersatz getrenntem Befehls – Pufferspeicher, je nach dem, ob es sich um Daten oder Befehle handelt, jeweils adressenabhängig dem Registersatz oder dem Befehlspufferspeicher zugeführt. Sofern eine Adresse eines auszuführenden Befehls, der noch nicht im Befehlspufferspeicher enthalten ist, zum Befehlholen ansteht, so wird vorteilhaft in einer Prüfschaltung zusätzlich untersucht, ob seine Adresse etwa in der Adreßpipeline enthalten ist, und, wenn dies der Fall ist, auf die Einspeicherung des Befehles in den Befehls – Pufferspeicher gewartet.

Eine weitere vorteilhafte Ausgestaltung ist es, daß ein besonderer Befehl, nämlich ein Vorausladebefehl, vorgesehen ist, der die Übertragung einer im Befehl vorgegebenen Zahl von Befehlsworten in den Pufferspeicher steuert.

Die vorgegebene Anzahl Befehlsworte wird im Befehl auf Halbworte bezogen angegeben und bei der Übertragung der Befehlsworte bedarfsweise auf die nächste Ganzwortgrenze aufgerundet. Der Vorausladebefehl wird dann vorteilhaft angewandt, wenn eine größere Zahl von Hauptspeicher – Datenbefehlen aufeinander folgt, da dadurch ein häufiger Seitenwechsel zwischen Befehls – und Datenseiten bei der Befehlsausführung vermieden wird; denn es erfolgen dabei keine zwischengeschachtelten Befehlszugriffe mehr.

Weiter ist ein setz – und löschbarer Puffermodusmerker im Programm vorteilhaft. Er sichert, daß bei einem Vorwärtsprungbefehl mit relativer Adresse innerhalb einer Schleife, sofern sich der Zielbefehl des Sprungsbefehles noch nicht im Pufferspeicher befindet, daß erst die Vorwärtsprungverzweigung ausgeführt wird und dann so lange gewartet wird, bis die Befehlsfolge bis zur Zieladresse in den Befehlspufferspeicher eingeladen worden ist, wodurch erreicht wird, daß die gesamte Schleife dort erst vollständig, bereit für mehrmaligen Durchlauf, vorhanden ist, bevor die weitere Befehlsentschlüßlung und – ausführung erfolgt. Durch den Puffermodusmerker wird auch sichergestellt, daß eine Befehlsfolge, deren Anfangsbereich unter Umständen übersprungen wird, vollständig eingeladen wird und so zu verzögerungsfreien mehrmaligen Durchläufen bereitgestellt wird.

Der Vorausladebefehl und der Befehl für das Setzen des Puffermodusmerkers werden vorteilhaft von einem Compilerprogramm jeweils dann in eine Befehlsfolge eingefügt, wenn die vorgenannten Kriterien vorliegen.

Eine weitere vorteilhafte Ausgestaltung besteht darin, daß zur besseren Ausnutzung der Befehlsspeicherkapazität Befehle variabler Wortlänge mit vorzugsweise ein bis drei Halbworten benutzt werden, die aneinander anschließend in Ganzworten gespeichert sind, wobei der Pufferspeicher so ausgestaltet ist, daß jeweils Ganzworte in ihn eingeschrieben werden, die Befehle jedoch aus dem Puffer mit positionsgerechten Befehls – und Adreßteilen dem Befehlsdekodierer zugeführt werden. Eine vorteilhafte Ausgestaltung des Pufferspeichers als Halbwortspeicher mit Mehrfachauslesung ermöglicht einen verzögerungsfreien Zugriff zu den Befehlen und macht eine nachgeschaltete Teilwortverschiebung oder einen mehrmaligen Zugriff entbehrlich.

Eine vorteilhafte Ausführung ist in den Figuren 1 bis 5 dargestellt.

Fig. 1     zeigt ein Übersichtsbild der Datenverarbeitungsvorrichtung;

Fig. 2     zeigt ein Blockschaltbild der Puffersteuervorrichtung;

Fig. 3     zeigt ein Blockschaltbild der Befehlszählerschaltung;

Fig. 4     zeigt ein Blockschaltbild des Pufferspeichers;

Fig. 5     zeigt eine Schaltung einer Speicherzelle.

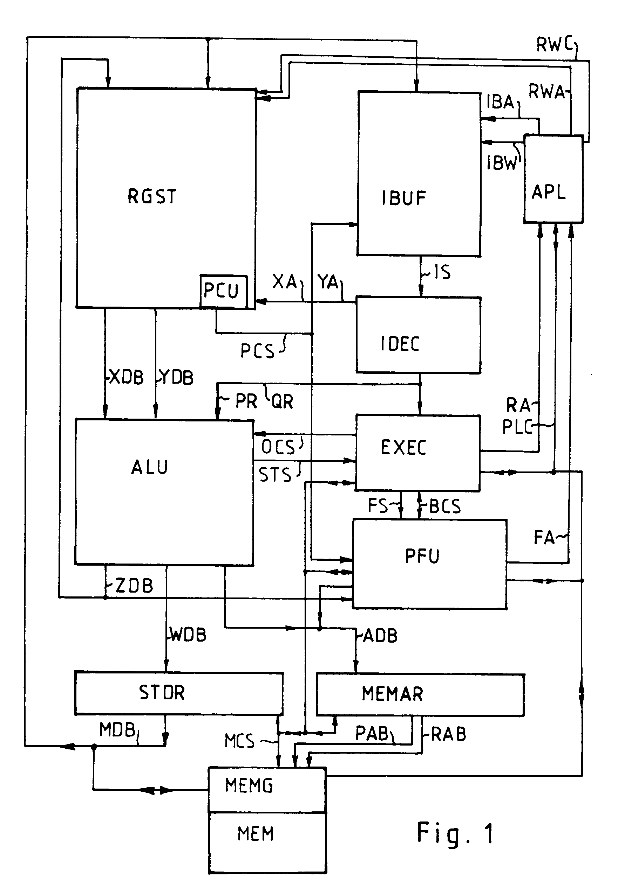

In Fig. 1 ist eine Datenverarbeitungsvorrichtung im Blockschaltbild dargestellt, deren Daten und Programm in einem Hauptspeicher (MEM) gespeichert sind, die über einen Speicherdatenbus (MDB) abhängig von einem Speichersteuerwerk (MEMG) einem Registersatz (RGST) und von dort über zwei Datenbusse (XDB, YDB) einem Rechenwerk (ALU) bzw. vom Speicherdatenbus (MDB) einem Pufferspeicher (IBUF) und von diesem abrufgesteuert einem Befehlsdekodierer (IDEC) und von diesem einem Befehlssteuerwerk (EXEC) zugeführt werden. Die Befehle werden nacheinander von einem Befehlsadreßwerk (PCU), das mit dem Registersatz (RGST) verbunden ist, über Befehlsadreßsignale (PCS) mit aus dem Pufferspeicher (IBUF) abgerufen, wobei die Befehlssignale (IS) dem Befehlsdekodierer (IDEC) zugeführt werden. Die Befehlsadreßsignale (PCS) werden außerdem einer Befehlsladeschaltung (PFU) zugeführt, die weiterhin vom Befehlssteuerwerk (EXEC) Befehlssteuersignale (FS) zur Ausführung der Sonderbefehle erhält, sowie Status- und Steuersignale, nämlich Verzweigungssteuersignale (BCS), Pipelineladesignale (PLC) und jeweils zugehörige Statussignale, mit dem Befehlssteuerwerk (EXEC), einer Adreßpipeline (APL) und dem Speichersteuerwerk (MEMG) austauscht. Die Adreßpipeline (APL) nimmt jeweils Registerladeadressen (RA) oder Pufferladeadressen (FA) auf und gibt diese als Registerschreibadresse (RWA) zusammen mit einem Registerschreibsignal (RWC) oder als Pufferschreib-Adresse (IBA) zusammen mit einem Pufferschreibsignal (IBW) an den Registersatz (RGST) oder den Pufferspeicher (IBUF) verzögert ab. Die Verzögerung entspricht dabei der Hauptspeicherdatenentnahmezeit, die gleichzeitig mit der Speicheradreßübergabe über Speicherkontrollsignale (MCS) gestartet wird. Dazu wird die zugehörige Hauptspeicheradresse über einen Speicheradreßbus (ADB) vom Rechenwerk (ALU) oder von der Befehlsladeschaltung (PFU) an ein Speicheradreßregister (MEMAR) abgegeben, von dem sie gewöhnlich über einen Seitenadreßbus (PAB) und einen Zeilenadreßbus (RAB) dem Hauptspeicher (MEM) zugeführt wird.

Im Rechenwerk (ALU) errechnete Ergebnisse werden über einen Ergebnisdatenbus (ZDB) in den Registersatz (RGST) zurückgeführt oder über einen Schreibdatenbus (WDB) und ein Schreibregister (STDR) auf den Speicherdatenbus (MDB) und so dem Speichersteuerwerk (MEMG) zum Zurückschreiben in den Hauptspeicher zugeführt.

Die Steuerung des Rechenwerkes (ALU) erfolgt über Befehlssteuersignale (OCS) abhängig von Zustandssignalen (STS). Die Sprungbefehls-Adressen werden im Falle einer Befehlsverzweigung über den Ergebnisdatenbus (ZDB) in das Befehlszählwerk (PCU) und die Befehlsladeschaltung (PFU) gebracht.

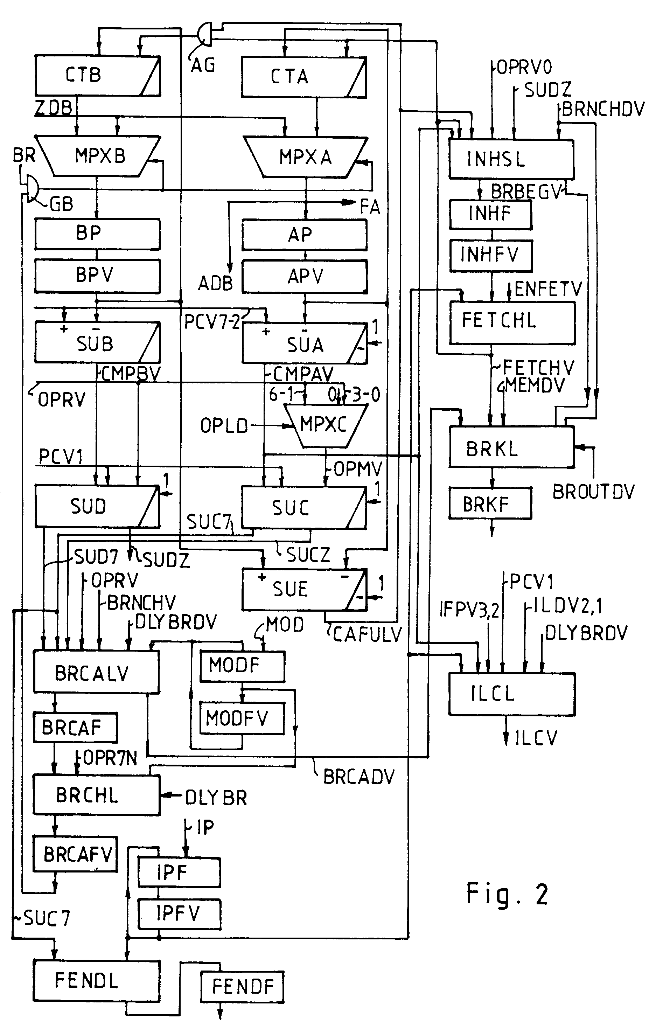

Die Einzelheiten der Befehlsladeschaltung (PFU) sind in Fig. 2 dargestellt. Der Datenfluß durch die Schaltung wird durch zwei nicht dargestellten Taktfolgen wechselweise bewirkt. Die Register und Flipflops, die mit der einen Taktfolge angesteuert werden, sind von denjenigen, die mit der zweiten Taktfolge angesteuert werden, durch ein endständiges "V" in dem Bezugszeichen zu unterscheiden. Die an eine Buchstabenbezeichnung angehängten Ziffern geben die Stelle der Signale in einer Binärzahl eines Ergebnisses am Ausgang eines Registers oder eines Summierwerkes an. Ein endständiges "N" gibt ein negiertes Signal an. Ein "F" an letzter oder vorletzter Stelle einer Buchstaben-Bezeichnung gibt an, daß es sich um ein Flipflop handelt. Soweit in der Beschreibung Formeln für die logische Verknüpfung von Signalen angegeben sind, bedeuten das "&"-Zeichen logisch-UND und das "v"-Zeichen logisch-ODER. Die Größen, die in den Formeln angegeben sind, stehen an den Ausgängen der angegebenen Schaltelemente an und werden jeweils zueinander stellengerecht verknüpft und mit dem nächsten Maschinentakt in die Schaltelemente übertragen die nach dem Ergebnispfeil angegeben sind.

Bei der dargestellten Schaltungsanordnung ist die Größe des Pufferspeichers zu 64 Halbworten zu 16 bit angenommen, so daß die Pufferspeicherleseadresse 6 bit lang ist. Da die Befehle in Ganzworten verpackt eingespeichert werden, sind nur die Stellen 2 bis 6 zur Schreibadressierung genutzt. Die niedrigstwertige Stelle ist mit Null bezeichnet; sie dient einer Bytelokalisierung, die hier ohne Funktion ist.

Zur Steuerung des Pufferspeichers werden außer dem Befehlszähler, dessen Befehlszählersignale (PCV) in die Steuervorrichtung eingeführt

4

werden, zwei Zeigerregister, nämlich ein 30-stelliges Ladezeigerregister (AP) mit einem Ladezeigeraddierer (CTA) und einem Ladezeigerhilfsregister (APV) sowie ein 5-stelliges Rückzeigerregister (BP) mit einem Rückzeigeraddierer (CTB) und einem Rückzeigerhilfs-Register (BPV) benutzt. Bei einem Verzweigungsbefehl auf eine Adresse, die außerhalb des Befehlspufferspeichers liegt, werden der Befehlszählerinhalt und die beiden Zeiger auf den gleichen Wert gestellt, wozu die Lademultiplexer (MPXB, MPXA) jeweils an den Ergebnisdatenbus (ZDB) über ein Ausgangssignal einer UND-Gatterschaltung (GB) angeschlossen werden, das von einem Sprungbefehlssignal (BR) und einem Verzweigungssignal (BRCAFV) beaufschlagt ist. Das Ladezeigerregister (AP) ist auf die vollständige Adresse des Hauptspeichers von Stelle 2 bis 31 ausgelegt, und das Rückzeigerregister (BP) nur entsprechend der Pufferspeicherlänge auf die Stellen 2 bis 6.

Vor jeder Befehlsenschüßlung wird untersucht, ob der Befehl bereits im Befehlspufferspeicher ist. Dazu werden von den Befehlsadreßsignalen (PCV7-2) die hinteren Stellen der Zeiger jeweils in einem ersten Summierer (SUB, SUA) subtrahiert, wobei die negative Zahl der im Befehls-Pufferspeicher enthaltenen vorausgeladenen Worte (COMPAV) und die Zahl der rückgelegten Worte (CMPBV) gebildet werden. Für den Fall, daß ein Verzweigungsbefehl ausgeführt wird, wird die in Halbworten angegebene Sprungweite (OPRV, OPMV) jeweils in zweiten Summierwerken (SUD, SUC) zu den errechneten Wortzahlen zusammen mit einer Korrektur-Eins und der letzten Stelle des Befehlszählersignales (PCV1) addiert, so daß ein auftretender Überlauf (SUC7, SUD7) jeweils anzeigt, ob das Verzweigungsziel im Befehlspufferspeicher enthalten ist, worauf diese Verzweigung unmittelbar ausgeführt wird, oder, wenn seine Adresse sich bereits in der Adreßpipeline befindet, dann wird die Verzweigung ausgeführt und bis zu der Einspeicherung des Zielbefehlswortes in den Pufferspeicher gewartet, und dann wird dieses in den Befehlsentschlüßler ausgelesen. Die Steuersignale der verschiedenartigen Verzweigungsbefehle und die Überlaufsignale (SUC7, SUD7) werden in den Verzweigungsauswerteschaltungen (BRCALV, BRCHL) in zwei zeitlichen Stufen mit nachgeschalteten Flipfolps (BRCAF, BRCAFV) ermittelt, so daß das Ausgangssignal (BRCAFV) die Ausführung der Verzweigung freigibt oder andernfalls einen neuen Start des Pufferladens veranlaßt. Hierzu wird die Sprungadresse nur in das Befehlszählwerk übertragen, wenn das Verzweigungsflipflop (BRCAFV) gesetzt ist; andernfalls wird sie auch in die Zeigerregister (AP, BP) übertragen, und ein Befehlsabruf wird gestartet.

Die Verzweigungsteuerschaltungen (BRCALV, BRCHL) beinhalten im einzelnen folgende Verknüpfungen:

Ist ein Rückwärtssprungkriterium (OPRV0) gegeben und zeigt der zweite Summierer (SUD) des Rückzeigers einen Überlauf (SUD7) oder ist ein Vorwärtssprungkriterium gegeben und zeigt der zweite Summierer (SUC) des Vorwärtszeigers kein Überlaufsignal (SUC7) oder auf den Stellen 6-3 Nullsignale (SUCZ), so wird das Zwischen-Verzweigungsflipflop (BRCAF) gesetzt, falls vorher kein Sprungbefehl ausgeführt wurde, was durch das Sprungkriterium (BRANCHV) jeweils angezeigt würde.

In logischer Gleichung ergibt sich:

$$((OPRV0 \ \& \ SUD7) \ v \ (OPRV0N \ \& \ (SUC7N \ v \ SUCZ))) \ \& \ BRANCHVN \rightarrow BRCAF.$$

Das zweite Verzweigungsflipflop (BRCAFV) wird gesetzt, wenn ein Kriterium für eine Kurzbefehlslänge (OPR7N) gegeben ist und entweder das erste Verzweigungsflipflop (BRCAF) gesetzt ist oder ein Puffermodusmerker (MODF) gesetzt ist und ein Kriterium eines Vorwärtssprunges (OPRON) zusammen mit dem eines verzögerten Sprunges (DLYBR) gegeben ist.

Die logische Gleichung heißt somit:

$$OPR7N \ \& \ (BRCAF \ v \ (MODF \ \& \ OPR0N \ \& \ DLYBR)) \rightarrow BRCAFV.$$

Ein verzögerter Sprungbefehl ist ein solcher Sprungbefehl, dem ein Befehl im Programm nachgeordnet ist, der in jedem Fall nach dem Sprungbefehl zur Ausführung kommt.

Der Puffermodus-Merker (MODF, MODFV) wird durch Statusbearbeitungsbefehle mit Steuersignalen (MOD) gesetzt oder gelöscht. Auf diese Weise kann in bestimmten Fällen der Pufferinhalt gesichert werden. Ist bei einem vorwärtsgerichteten, relativen und verzögerten Sprungbefehl mit einer Befehlslänge von einem Halbwort der Puffermodus vorhanden, dann wird das Sprungziel als im Puffer erreichbar gewertet, auch wenn das Vergleichsergebnis dieses noch als außerhalb liegend ausweist. Hierdurch wird eine Löschung des Befehlspufferspeicherinhalts verhindert. Die Steuerkriterien des verzögerten bzw. vorwärtsgerichteten Sprunges sind Verzweigungssteuersignale, die aus dem Befehlssteuerwerk kommen.

Ein dem Ausgangssignal des Verzweigungsfliplflops (BRCAFV) gleichwertiges, aber eine Taktphase früher gewonnenes, Verzweigungssteuersignal (BRCADV) wird an eine Befehlswort-Vorausladeschaltung (BRKL) gegeben. Zum Vorausladen von Befehlsworten wird der Ladezeiger jeweils ensprechend einer Wortlänge erhöht. Dazu wird im Ladezeigeraddierer (CTA) eine eins addiert. Nach jedem Verändern des Ladezeigers durch die Erhöhung um Eins oder durch eine Ladung mit einer Verzweigungsadresse über den Multiplexer (MPXA) wird der neue Ladezeiger als Ladeadresse (FA) an die Adreßpipeline weitergeleitet, von wo er zeitgerecht für den Ladevorgang dem Pufferspeicher zugeleitet wird. Wie weit das Vorausladen von Befehlsworten in den Pufferspeicher vor die jeweils aktuelle Befehlsadresse erfolgt, wird durch die BefehlsvorausladeSchaltungen (INHSL; FETCHL, BRKL) bestimmt. Zum Anhalten des Vorausladens wird im Ladezeigeraddierer (CTA) jeweils eine Null addiert. Die Entscheidung, ob ein Vorausladen noch erfolgen soll, wird in der ersten Vorausladeschaltung (INHSL) ermittelt, und es wird jeweils im nächsten Taktzyklus dann gestoppt, wenn die vorausgeladene Wortzahl (CMPAV) kleiner als $-8$ ist oder wenn sie gleich $-8$ ist und noch ein Befehlsladezyklus stattfindet. Außerdem wird das Vorausladen gestoppt, wenn ein Puffervollkriterium (CAFULV) signalisiert wird, und sich ein Verzweigungsbefehl in dem Befehlsdekodierer befindet, dessen Sprungziel in dem Befehlswort liegt, auf das der Rückzeiger zeigt. Damit wird verhindert, daß das Sprungziel durch den Ladevorgang überschrieben wird. Das PuffervollKriterium (CAFULV) wird jeweils durch Differenzbildung der Zeigerstände (BPV, APV) und Abziehen einer Eins in einem fünften Summierwerk (SUE) gebildet, wenn dabei ein Nullergebnis entsteht. Das Ergebnis dieser VorausladeEntscheidungslogik (INHSL) wird in das VorausladeFlipfloppaar (INHF, INHFV) für den nächsten Taktzyklus übergeben.

Die Logikgleichungen der VorausladeEntscheidungslogik (INHSL) lauten:

$$((CMPAV7-2 < -7) \ \& \ ((CMPAV < -8) \ v \ FETCHV))$$
$$v \ (BRNCHDV \ \& \ OPRV0 \ \& \ CAFULV \ \& \ SUDZ) \rightarrow INHF.$$
$$BRNCHDV \ \& \ OPRVO \ \& \ CAFULV \ \& \ SUDZ \sim BRBEGV.$$

Hierbei bedeuten die Bezeichnungen ein BefehlsladeKriterium (FETCHV) und ein Nullergebenissignal (SUDZ) des zweiten Summierwerkes (SUD) des Rückwärtszeigers.

Das Rückzeigerkriterium (BRBEGV) zeigt an, wenn das Sprungziel in dem Befehlswort liegt, das vom Rückzeiger angegeben wird.

Jeweils im folgenden Zyklus nach der Ermittlung des Vorausladekriteriums wird das Adreßregister geladen und der Speicherzyklus gestartet, wenn das Vorausladeflipflop (INHFV) nicht gesetzt ist, das Adreßregister frei ist und ein AdreßpipelineFreisignal (ENFETV) gegeben ist und ein BefehlsseitenfehlerFlipflop (IPFV) nicht

gesetzt ist.

Die Logikgleichung für die Befehlsladeschaltung (FETCHL), die das BefehlsladeKriterium (FETCHV) erzeugt, lautet:

$$INHFVN \ \& \ IPFVN \ \& \ ENFETV \rightarrow FETCHV,$$

und dieses bewirkt:
- Der Ladezeigeraddierer (CTA) addiert eine Eins;
- der Rückzeigeraddierer (CTB) addiert eine Eins, falls das PufferspeicherVollsignal (CAFULV) vorhanden ist;
- der erhöhte Ladezeiger wird ins Ladezeigerregister (AP) übernommen;
- die Stellen 6 bis 2 des erhöhten Ladeziegers (FA) werden in die Adreßpipeline übernommen;
- der erhöhte Ladezeiger wird über den Speicheradreßbus (ADB) in das Speicheradreßregister übergeben.

Mit dem folgenden Takt wird die Hauptspeicheradresse vom Speicheradreßregister über den Seitenadreßbus und den Zeilenadreßbus dem Hauptspeicher zugeführt und ein Speicherzyklus gestartet, sofern dieser nicht durch ein Abbruchsignal (BRKF) beendet wird, das in einer Abbruchschaltung (BRKL) erzeugt und an ein nachfolgendes Abbruchflipflop (BRKF) gegeben wird. Das Abbruchflipflop (BRKF) wird gesetzt, wenn während des Ladens des Adreßregisters
- ein Speicherbefehl dekodiert wird, was durch ein SpeicherbefehlDekodiersignal (MEMDV) signalisiert wird,
- oder ein Befehl dekodiert wird, der einen Sprung verursachen kann und zwar unabhängig ob der Sprung auch tatsächlich ausgeführt wird, was durch ein Dekodiersignal eines Absolutsprungbefehls (BROUTDV) signalisiert wird; ausgenommen sind relativ zum Befehlszähler adressierte Sprungbefehle mit einer Befehlslänge von einem Halbwort, die durch das Relativsprungsignal (BRNCHDV) angezeigt werden, wenn deren Sprungziel im Pufferspeicher erreichbar ist, was durch das Verzweigungssignal (BRCADVN) angegeben wird;
- oder ein Sprungbefehl (BRNCHDV) dekodiert wird bei vollem Pufferspeicher, wenn sich das Sprungziel in dem Befehlswort im Pufferspeicher befindet, das der Rückzeiger (BPV) angibt, was durch das Rückzeigerkriterium (BRBEGV) angegeben wird. Das Sprungziel würde sonst beim BefehlVorausladen überschrieben werden.

Die Logikgleichung der Abbruchschaltung (BRKL) lautet:

FETCHV & (MEMDV v BROUTDV v (BRNCHDV & BRCADVN) v BRBEGV) → BRKF.

Das Signal des Abbruchflipflops (BRKF) verhindert, daß die Speicheradresse im Adreßregister auf die Adreßsammelleitung geschaltet wird und verhindert die Übernahme der Inhalte der ersten Zeigerregister (BP, AP) in die nachgeschalteten Zeigerregister (BPV, APV), was im einzelnen nicht dargestellt ist.

Die Vollständigkeitsprüfschaltung (ILCL) ermittelt jeweils, ob ein Befehl, dessen erstes Halbwort im Pufferspeicher adressiert wird, vollständig dort zur Verfügung steht.

Das Ladezeigeraddierwerk (SUA) gibt die negative Anzahl (COMPAV) der Befehlswörter im Vorausladebereich an. Von dieser Anzahl können sich maximal noch zwei Befehlswörter auf dem Ladewege befinden. Die jeweilige in der Adreßpipeline befindliche Befehlswort-Anzahl (IFPV3,2) wird aus der Adreßpipeline in die Prüfschaltung (ILCL) eingegeben. Durch Differenzbildung der genannten positiven bzw. negativen Wortzahlen ergibt sich die Gesamtwortzahl (IWRDYV7−2) im Pufferspeicher vorhandener Befehlsworte, wenn der Befehlsseitenfehlermerker (IPFV) nicht gesetzt ist; andernfalls wird die Gesamtwortzahl um eins reduziert. Es ergibt sich mindestens eine Einwortverfügbarkeit (WRDY1V), wenn die negative Anzahl (COMPAV) der vorausgeladenen Worte und die Geamtwortzahl (IWRDYV7−2) negativ sind und, sofern der Befehlsseitenfehlermerker (IPFV) gesetzt ist und die Gesamtwortzahl (IWRDYV7−2) nicht minus eins ist.

Es ergibt sich mindestens eine Zweiwortverfügbarkeit (WRDY2V), wenn mindestens die Einwortverfügbarkeit (WRDY1V) gegeben ist und außerdem die Gesamtwortzahl (IWRDYV7−2) kleiner als minus eins ist und, sofern der Befehlsseiten-Fehlermerker (IPFV) gesetzt ist und die Gesamtwortzahl (IWRDYV7−2) nicht minus zwei ist.

Aus der dekodierten Befehlslänge (ILDV2,1), aus der Verfügbarkeiten der Befehlsworte (WRDY1V, WRDY2V) und aus der Halbwortadreßstelle der Befehlsadresse (PCV1) wird ein Befehlsverfügbarkeitssignal (RDYV) ermittelt, bei dessen Auftreten die dekodierte Befehlslänge (ILDV2,1) als Inkrementsignale (ILCV) dem Befehlszählwerk zugeführt wird. Dies ist der Fall, wenn
- entweder mindestens zwei Worte verfügbar sind,
- oder ein Wort verfügbar ist und der Befehl kein verzögerter Sprungbefehl, der stets drei verfügbare Halbworte verlangt, ist und der Befehl entweder nur ein Halbwort umfaßt oder, falls er zwei Halbworte umfaßt, das erst Halbwort an einem Wortanfang plaziert ist.

Falls der Befehl ein verzögerter Sprungbefehl ist, wird dieser erst freigegeben, falls auch für den nachfolgenden Befehl eine vollständige Verfügbarkeit gegeben ist. Solange keine vollständige Verfügbarkeit gegeben ist, wird dem Befehlszählwerk eine Null zugeführt. Verabredungsgemäß ist die Summe aus der Befehlslänge eines verzögerten Sprungbefehls und der Befehlslänge der darauffolgenden Befehls auf insgesamt maximal 3 Halbworte begrenzt.

Die Vollständigkeitsprüflogik lautet:

CMPAV + IFPV3,2 ~ IWRDYV7−2.
(CMPAV < 0) & (IWRDYV7−2 < 0) & (IPFV & (IWRDYV7−2 = −1))N ~ WRDY1V.
WRDY1V & (IWRDYV7−2 < −1) & (IPFV & (IWRDYV7−2 = −2))N ~ WRDY2V.
((ILDV2N v (ILDV1N & PCV1N)) & WRDY1V & DLYBRDVN) v WRDY2V ~ RDYV.
ILDV2,1 & RDYV ~ ILCV.

Das Zeichen "~" ist für die Äquvalenzfunktion gesetzt.

War ein Vorauslade-Befehl aus dem Pufferspeicher ausgelesen worden, so stoppt die Dekodierung und Ausführung des folgenden Befehls solange, bis die in dem Vorauslade-Befehl angegebene, auf den Befehl folgende, Anzahl Halbworte über den Pufferspeicher erreichbar ist. In den Operationscodestellen (OPRV3...0)ist die Anzahl der Halbworte kodiert, weshalb der Multiplexer (MPXC) mit dem vorausladebefehlssignal (OPLD) von der 6. bis 1. Stelle des Sprungweitensignals (OPRV) auf die Stellen 3 bis 0 desselben schaltet, wobei den anderen Eingängen Nullen zugeführt werden. Die Multiplexer-Ausgangssignale werden dem zweiten Summierer (SUC) zugeführt. In der Ladebefehlsendeschaltung (FENDL) wird dann das Summiererüberlaufsignal (SUC7N) und das Befehlsseitenfehlerflipflopsignal (IPFV) in einer Oder-Schaltung zusammengeführt, und mit dessen Ausgangssignal wird das Ladebefehlende-Flipflop (FENDF) gesetzt. Sofern das Befehlsende durch das Befehlsseitenfehlersignal (IPFV) herbeigeführt wurde, wird die Befehlsausführung fortgesetzt, soweit vollständige Befehle vorhanden sind; ist dies nicht mehr der Fall, wird eine Seitenfehlerbehandlung vorgenommen.

Die logische Formel lautet somit:

SUC7N v IPFV → FENDF.

Mit dem Ladebefehlsende wird signalisiert, daß mindestens die im Ladebefehl angegebene Anzahl Halbworte im Pufferspeicher erreichbar ist und der nächste Befehl zur Dekodierung in den Befehlsdekodierer zu laden ist.

Der Puffermodusmerker (MODF) ist Bestandteil eines Statusregisters, das unter Programmkontrolle veränderbar ist. Sein Zustand wird vorteilhaft bei Unterprogrammsprüngen oder bei einer Ausnahmeverarbeitung gerettet und bei den zugehörigen Rücksprüngen wieder gesetzt. Ist der Puffermodusmerker gesetzt, so gilt bei Vorwärtssprüngen mit verzögerten Sprungbefehlen mit einer Befehlslänge von einem Halbwort das Sprungziel als im Pufferspeicher erreichbar, unabhängig vom Ausgangssignal der Verzweigungs-Steuerschaltung. Die Verzweigung wird dann auch über den Stand des Ladezeigers hinaus durchgeführt, ohne daß die Zeiger (AP, BP) neu gesetzt werden, und erst dann, wenn das Befehlswort, das zu der Sprungadresse gehört, in den Pufferspeicher geladen ist und die Vollständigkeitsprüfung erfolgt ist sowie die Verfügbarkeit gegeben ist, wird der Befehl an der Einsprungstelle zur Dekodierung freigegeben. Der Puffermodusmerker bleibt in diesem Fall gesetzt; bei allen anderen Verzweigungsbefehlen, d.h., bei zur Ausführung kommenden unverzögerten Sprungbefehlen, wird er gelöscht.

Die Befehlsseitenfehlermerker (IPF, IPFV) werden gesetzt, wenn bei einem Befehlslade-Speicherzyklus ein Seitenfehler von dem Speichersteuerwerk gemeldet wird. Daraufhin wird der Eintrag in der Adreßpipeline gelöscht und das Befehlsvorausladen angehalten. Das Programm verzweigt erst dann in die Seitenfehlerbehandlung, wenn der Befehl nicht vollständig in der Dekodierstufe vorhanden ist und mangels einer Pipelineadreßeintragung kein Befehlswort mehr vom Speicher zu erwarten ist und der vorhergehende Befehl keine unverzögerte Verzweigung ausführt, d.h., der Befehl in der Dekodierstufe tatsächlich gebraucht wird. Jeder Verzweigungsbefehl, dessen Ziel nicht im Pufferspeicher erreichbar ist, löscht die Befehlsseitenfehlermerker (IPF, IPFV).

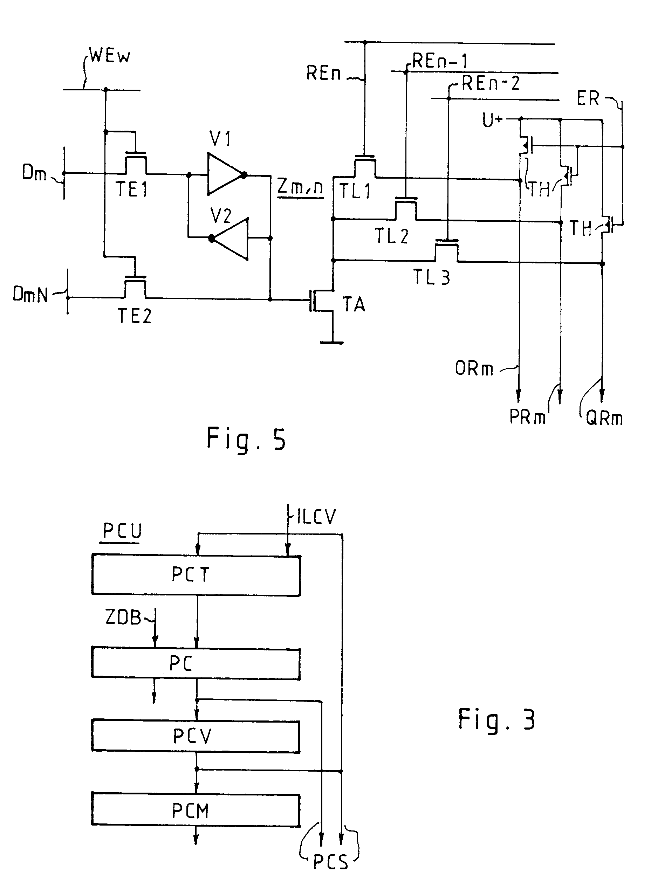

In Fig. 3 ist das Befehlszählwerk (PCU) schematisch dargestellt. Das Befehlsadreßregister (PC) und das Folgeregister dazu (PCV) enthalten die Befehlsadresse, so daß von diesen zu den entsprechenden Taktzeiten die Befehlsadreßsignale (PCS) dem Pufferspeicher und der Befehlsladeschaltung zugeführt werden. Außerdem werden die Befehlsadreßsignale (PCS) über ein Befehlsadreßaddierwerk (PCT), dem das jeweilige Inkrement (ILCV) gemäß der jeweiligen Befehlslänge zugeführt wird, Eingängen des Befehlsadreßregisters (PC) zurückgeführt, falls nicht eine Verzweigungsadresse vom Ergebnisdatenbus (ZDB) in dieses eingespeichert wird. Die vorherige Befehlsadresse wird außerdem in ein Erinnerungsregister (PCM) übernommen, woraus sie von speziellen Programmen abrufbar ist.

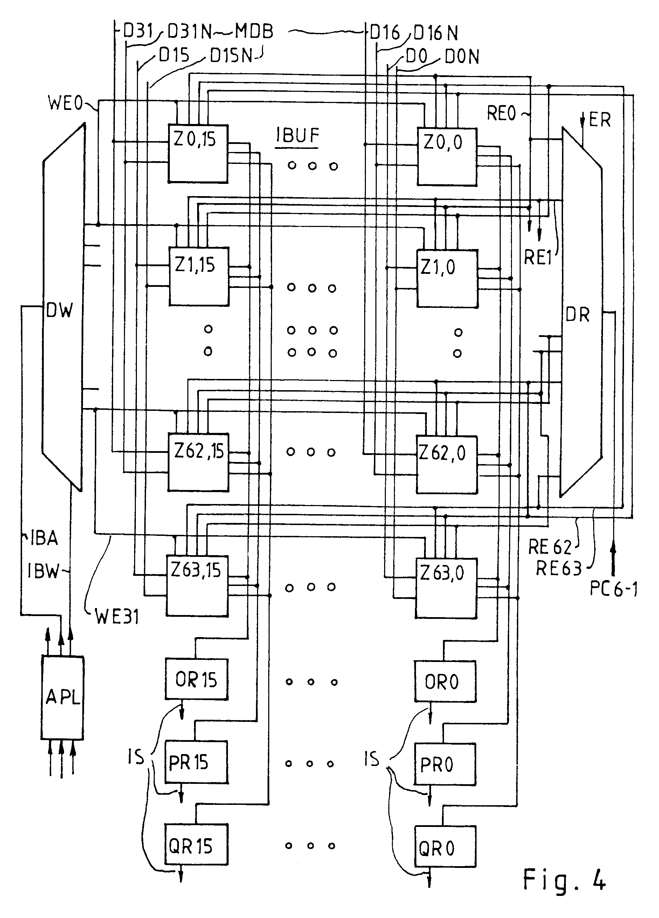

Fig. 4 zeigt ein Schaltschema einer vorteilhaften Ausgestaltung des Befehlspufferspeichers (IBUF), der aus Zellen (Z0,0;....;Z63,15) für 64 Halbworte zu 16 bit ausgelegt ist. Die Einspeicherung der Befehlsfolgen geschieht mit Ganzworten, wobei die Daten jeweils vom Speicherdatenbus (MDB) auf die Schreibdatenleitungen (DO, DON;...D31, D31N) gegeben werden und die zugehörigen Befehlsschreibadressen (IBA) aus der Adreßpipeline (APL) auf den Schreibadreßdekoder (DW) geführt werden, der jeweils zwei benachbarte Pufferspeicherzeilen, in denen ein Ganzwort gespeichert wird, gleichzeitig auf jeweils einer der 32 Schreibdekoderleitungen (WEO,...WE31) ansteuert, wenn das Befehlsschreibsignal (IBW) gegeben ist.

Das Auslesen der Befehle aus dem Pufferspeicher (IBUF) geschieht jeweils mit der Pufferleseadresse (PC6-1), gesteuert mit einem Lesefreigabesignal (ER), über den Lesedekoder (DR), der 64 Lesedekoderausgänge (RE0,...RE63) hat, die jeweils die adressierte gleichbenannte Halbwortzeile selbst und die beiden folgenden Halbwortzeilen jeweils zu einer ersten, zweiten bzw. dritten Leseschaltung zyklisch zugeordnet beaufschlagen. Die zugehörigen Ausgangssignale der Speicherzellen (Z0,0;...Z63,15), sind spaltenweise auf drei Halbwortregister oder Ausgangsverstärker (OR0,...OR15, PR0,...PR15; QR0,..QR15) geführt, so daß das erste Halbwort in das Operationskode-Register (OR0,...OR15) und das zweite und dritte Halbwort je in ein Teiladreßregister (PR0,...PR15, QR0,...QR15) eingespeichert werden, die die Befehlssignale (IS) zum Befehlsdekodierer abgeben.

Ein geeigneter Zellaufbau einer Speicherzelle (Zm,n) in einer m-ten Spalte und einer n-ten Zeile ist in Fig. 5 dargestellt. Die Speicherzellenschaltung besteht aus zwei schwach rückgekoppelten Invertern (V1, V2), in die bei aktivierter Schreibdekoderleitung (WEw) eines w-ten Wortes und der jeweilig aktivierten Datenleitung (Dm, DmN) gemäß durch Und-Gatter bildende Eingangstransistoren (TE1, TE2) ein jeweils vorgegebener Zustand eingeschrieben wird. Der jeweilige Speicherzustand wird von einem Ausgangstransistor (TA) parallel drei Lesetransistoren (TL1, TL2, TL3) zugeführt, die jeweils zeilenmäßig zugeordnet mit einem der Lesedekoderausgänge (REn, REn-1, REn-2), die zur Leseadresse gleichnamig bzw. ein bzw. zwei Adressen niedriger adressiert sind, steuereingangsseitig verbunden sind und die ausgangsseitig zugeordnet mit jeweils einer von drei Spaltensammelleitungen verbunden sind, die jeweils auf einen spaltenmäßig zugeordneten Eingang der entsprechenden Registerstellen (ORm, PRm, QRm), des Operationskoderegisters und der Teiladreßregister führen. Die Spaltensammelleitungen sind jeweils über Ladetransistoren (TH), gesteuert durch das Lesefreigabesignal (ER), mit einer Spannungsleitung (+U) verbunden.

Somit kann jeder Befehl durch die Halbwortadressier‑Möglichkeit unabhängig von seiner Lage im Pufferspeicher bezüglich der Einspeicherung der Befehlsinformation in Ganzwortform unmittelbar in richtiger Zuordnung in das Befehlsregister ausgelesen werden. Statt eines Registers (ORm, PRm, QRm) kann auch eine Verstärkerzeile vorgesehen werden. Die Ein‑ und Ausgangstransistoren (TE1, TA, TL1) sind vorzugsweise MOS‑FET‑Transistoren.

Der Pufferspeicher wird entweder einzeln oder vorzugsweise mit der Steuerschaltung und der Adreßpipeline sowie dem Rechen‑ und Steuerwerk zusammen auf einem integrierten Schaltkreis, der vorzugsweise in CMOS‑Technologie hergestellt ist, angeordnet.

Simulationen mit üblichen Testmixprogrammen ergaben, daß die meisten, d.h. über 90%, der Sprungziele im Pufferspeicher erreicht werden konnten. Dabei wurde ein Pufferspeicher mit einer Kapazität von 64 Halbworten und mit der gezeigten Steuerung vorgesehen. Die dargestellte Steuerschaltung kann auch in äquivalenten Logikschaltungen ausgeführt werden, wobei z.B. die Reihenfolge der ersten und zweiten Summierer geändert werden kann und/oder statt des Rücklagezeigers ein Rücklagekapazitätszähler verwandt werden kann.

**Patentansprüche**

1. Verfahren zur Steuerung eines Befehlspufferspeichers (IBUF) in einer Datenverarbeitungsanlage, der bezüglich seiner Befehlswortkapazität zyklisch betrieben wird, wobei diesem, gesteuert von einer Ladezeigeradresse (AP, FA), die jeweils um maximal eine vorgegebene Differenz gegenüber einer, entsprechend einem Programmablauf laufend zu erhöhenden, Befehlsadresse (BRA) dieser vorauseilend erhöht wird, Befehlsworte aus einem Hauptspeicher (MEM) in den Befehlspufferspeicher (IBUF) nacheinander geladen werden, aus dem die Befehle, durch die Befehlsadresse (BRA) jeweils später adressiert, einem Befehlsentschlüssler (IDEC) zu einer Ausführung zugeführt werden, und bei dem der Befehlspufferspeicher (IBUF) einen Befehlsrücklagespeicher aufweist, in dem nacheinander geladene, bereits ausgeführte oder übersprungene Befehlsworte verbleiben, und bei dem eine im Programmablauf in einem Befehlsadreßteil eines Verzweigungsbefehls auftretende Verzweigungsadresse mit einem jeweiligen Adressenbereich verglichen wird, der jeweils zu den im Befehlspufferspeicher (IBUF) enthaltenen, nämlich vorausgeladenen und zurückgelegten, Befehlsworten gehört, und, falls die Verzweigungsadresse in dem genannten Adressenbereich liegt, der durch diese adressierte Befehl aus dem Befehlspufferspeicher (IBUF) abgerufen wird und, falls die Verzweigungsadresse außerhalb des genannten Adressenbereichs liegt, die Verzweigungsadresse dem Hauptspeicher (MEM) zugeführt und der genannte Adressenbereich gelöscht wird,
dadurch gekennzeichnet, daß von der Ladezeigeradresse (FA) mindestens die zur Befehlspufferspeicheradressierung notwendigen Adreßstellen einer Adreßpipeline (APL) jeweils zugeführt werden, und von der Adreßpipeline (APL) diese genannten Adreßstellen, nach einer Verzögerung, die jeweils der Zeit entspricht, in der eine Speicherzugriff‑Steuervorrichtung (MEMG) in der gegebenen Adreßfolge die Speicherzugriffe durchführt, als eine Pufferspeicherschreibadresse (IBA) dem Pufferspeicher (IBUF) zugeführt werden, und daß jeweils bei dem Vergleich der Verzweigungsadresse mit dem Adreßbereich der im Befehlspufferspeicher (IBUF) bereits enthaltenen vorausgeladenen Befehlsworte außerdem die in der Adreßpipeline (APL) gespeicherten Befehlswortadressen (FA) in den Vergleich einbezogen werden und, falls eine der Verzweigungsadresse entsprechende Adresse in der Adreßpipeline (APL) vorhanden ist, die zur Adressierung des folgenden Befehls erforderliche Inkrementierung der Befehlsadresse um eine jeweilige Befehlslänge erst dann erfolgt, wenn das Ausgangssignal (ILCV) einer Vollständigkeitsprüfschaltung (ILCL), der die Befehlswortanzahl (IFPV 3,2) der in der Adreßpipeline (APL) jeweils vorhandenen Befehle zugeführt ist, anzeigt, daß der von der Befehlsadresse adressierte Befehl im Befehlspufferspeicher vollständig verfügbar ist.

2. Verfahren nach Anspruch 1, dadurch gekennzeichnet, daß die Adreßpipeline (APL) für die Adressen (FA, RA) von sowohl aus dem Hauptspeicher (MEM) zu entnehmenden Befehlsworten als auch von Datenworten, die einem Registersatz (RGST) zuzuführen sind, dient und den Befehlswortadressen (FA) zugehörige Merkmale in die Adreßpipeline (APL) mitgegeben werden, abhängig von denen das Vorhandensein von Befehlswortadressen (FA) in der Adreßpipeline (APL) bei dem Vergleich berücksichtigt wird.

3. Verfahren nach Anspruch 1, dadurch gekennzeichnet, daß die Ladezeigeradresse jeweils vor ihrer Erhöhung mit einem Rücklagezeiger (BP) der das jeweils am weitesten zurücklie‑

gende Befehlswort bezeichnet, verglichen wird und, falls dieser Vergleich ein Pufferspeicher – vollsignal (CAFULV) ergibt, der Rücklagezeiger (BP) um eine Eins auf einer Wortadreßstelle erhöht wird.

4. Verfahren nach einem der Ansprüche 1 bis 3, dadurch gekennzeichnet, daß abhängig von einem Vorausladebefehl gemäß einer in dem Vorausladebefehl angegebenen Zahl (APRV3 – 0) von Befehlsworten oder Befehlshalbworten das Vorausladen des Befehlspufferspeichers (IBUF) gesteuert wird, wozu eine jeweilige Differenz (CMPAV) zwischen der Befehls – adresse (PCV7 – 2) und der jeweiligen Lade – zeigeradresse (APV) mit der angegebenen Zahl (OPRV3 – O) laufend verglichen wird und das so ermittelte Vorausladen – Ende einen im Befehlsentschlüßler (IDEC) anstehenden Befehl zur Ausführung freigibt.

5. Verfahren nach Anspruch 4, dadurch gekenn – zeichnet, daß der Vorausladebefehl durch ei – nen Compiler gesteuert in das Programm je – weils an einer solchen Stelle eingefügt wird, der eine vorgegebene Anzahl von Hauptspeicher – Datenbefehlen folgt, und/oder der eine mehrfach zu durchlaufende Pro – grammschleife folgt, deren Länge maximal der Rücklagepufferspeichergröße entspricht und hinter deren Schleifenanfang ein Schleifenein – satzpunkt liegt, sofern dieser Schleifenein – satzpunkt innerhalb eines vorgegebenen Be – reiches, z.B. einer Anzahl von Befehlsworten oder Befehlen, hinter dem Schleifenanfang liegt.

6. Verfahren nach der Ansprüche 1 bis 3, da – durch gekennzeichnet, daß abhängig von ei – nem Befehl ein Puffermodusmerker (MODF) setzbar und löschbar ist und von unverzöger – ten Sprungbefehlen gelöscht wird, bei dessen Gesetztsein eine Verzweigungsadresse eines verzögerten Sprungbefehles von Halbwortlän – ge nicht als neuer Ladezeiger übernommen und der Adressenbereich nicht gelöscht wird, sondern die Verzweigungsadresse in den Be – fehlszähler geladen wird, so daß jeweils der dadurch adressierte Befehl dann zur Ent – schlüßlung freigegeben wird, wenn dessen Verfügbarkeit festgestellt ist, nämlich dann wenn die Pufferladung bis zum Befehlszäh – lerstand erfolgt ist.

7. Verfahren nach Anspruch 6, dadurch gekenn – zeichnet, daß der Befehl zum Setzen des Puffermodusmerkers (MODF) durch einen Compiler gesteuert in das Programm jeweils dort eingesetzt wird, wo in einer mehrfach zu durchlaufenden Programmschleife, deren Länge maximal der Rücklage – Puffergröße entspricht, Vorwärtssprungbefehle zu Sprung – zielen innerhalb der Schleife enthalten sind.

8. Verfahren nach Anspruch 6 oder 7, dadurch gekennzeichnet, daß zu Beginn von Unterpro – grammen und Interruptprogrammen, der je – weilige Zustand des Puffermodusmerkers (MODF) gerettet und an deren Ende jeweils restauriert wird.

9. Verfahren nach einem der vorstehenden An – sprüche, dadurch gekennzeichnet, daß die verschiedenartigen Befehle eine unterschied – liche Befehlslänge von z.B. eins bis drei Be – fehlswortteilen, z.B. Halbworten, aufweist, die in Form von Befehlsworten fester Länge an – einanderschließend gespeichert sind, und daß vor jeder Befehlsausführung zuerst ein Ope – rationsteil, der der erste und ggf. zweite Be – fehlswortteil des jeweiligen Befehls ist, be – züglich der Befehlslänge dekodiert wird und eine vollständige Verfügbarkeit der jeweils zum Befehl gehörigen Befehlswortteile in dem Be – fehlspufferspeicher (IBUF) und ggf. der Adreßpipeline (APL) ermittelt wird und der Befehl erst dann ausgeführt wird, wenn sämt – liche zum jeweiligen Befehl gehörigen Be – fehlswortteile verfügbar und in den Befehls – entschlüßler (IDEC) übertragen worden sind, worauf die Befehlsadresse um die Befehlslän – ge inkrementiert wird.

10. Verfahren nach Anspruch 9, dadurch gekenn – zeichnet, daß bei einer maximalen Befehls – länge von drei Halbworten und bei einer Pi – pelinekapazität von zwei Ganzworten die Er – mittlung der Verfügbarkeit derart erfolgt, daß unter Berücksichtigung der Befehlsworte, die in der Pipeline sind, eine Einwort – und eine Zweiwortverfügbarkeit ermittelt wird und die vollständige Verfügbarkeit jeweils dann ange – zeigt wird, wenn entweder mindestens die Zweiwortverfügbarkeit gegeben ist oder wenn die Einwortverfügbarkeit gegeben ist und der Befehl weniger als drei Halbworte umfaßt und das erste Halbwort an einem Ganzwortanfang plaziert ist, was durch eine Null auf der Halb – wortadreßstelle signalisiert wird, oder die Be – fehlslänge nur ein Befehlshalbwort beträgt.

11. Verfahren nach Anspruch 9, dadurch gekenn – zeichnet, daß in dem Vorausladebefehl jeweils die Anzahl der vorauszuladenden Befehls – halbworte spezifiziert wird und demgemäß eine solche Zahl von Ganzworten in den Befehls –

pufferspeicher (IBUF) geladen wird, daß die spezifizierten Besfehlshalbworte dort erreichbar sind.

12. Verfahren nach einem der Ansprüche 9 bis 11, dadurch gekennzeichnet, daß eine der Befehlsarten ein verzögerter relativer Sprungbefehl ist, dem jeweils ein Befehl nachgeordnet ist, wobei deren Befehlslängen zusammen maximal drei Halbworte betragen, und daß für einen solchen verzögerten Sprungbefehl die vollständige Verfügbarkeit immer dann als ermittelt gilt, wenn die drei Halbworte verfügbar sind, woraufhin der nachgeordnete Befehl immer nach dem Sprungbefehl zur Ausführung kommt, auch wenn mit dem Sprungbefehl eine Verzweigung ausgeführt wird.

13. Verfahren nach einem der vorstehenden Ansprüche, dadurch gekennzeichnet, daß der Hauptspeicher (MEM) eine Seitenorganisation aufweist, durch die ein Befehlsseitenfehlersignal erzeugt wird, falls eine der dem Hauptspeicher (MEM) zugeführten Befehlsadressen (ADB) auf eine im Hauptspeicher (MEM) derzeit nicht vorhandene Seite verweist, wodurch die gleichzeitig in der Adreßpipeline (APL) vorhandene entsprechende Befehlsadresse gelöscht wird und nur demgemäß eine Befehlsausführung erfolgt, wodurch ein Befehlsseitenfehlermerker (IPF) gesetzt wird, abhängig von dem ein weiteres Vorausladen gestoppt wird und, falls ein Verzweigungsbefehl auf eine Befehlsadresse, die nicht im Befehlspufferspeicher (IBUF) erreichbar ist, ausgeführt wird, der Befehlsseitenfehlermerker (IPF) gelöscht wird und, falls der letzte verfügbare auszuführende Befehl kein Verzweigungsbefehl ist und der Befehlsseitenfehlermerker (IPF) noch gesetzt ist, eine Verzweigung in eine Befehlsseiten-Fehlerbehandlung erfolgt.

14. Schaltungsanordnung mit einem Befehlspufferspeicher (IBUF) in Datenverarbeitungsanlagen, in den Befehlsworte aus einem Hauptspeicher (MEM), gesteuert durch einen Ladezeiger (FA) in einem Ladezeigerregister (AP, APV), der einer Befehlsadresse um eine vorgegebene maximale Vorauslade-Wortzahl vorauseilend, laufend in einem Ladezeigeradierer (CTA) erhöht wird, eingeladen werden und aus deren Befehlspufferspeicher (IBUF), adressiert von der in einem Befehlszählwerk (PCU) fortlaufend gesteuert inkrementierten Befehlsadresse, in einem Programmablauf Befehle gelesen und in einen Befehlsentschlüßler (IDEC) zur Ausführung übertragen werden, wobei der Befehlspufferspeicher (IBUF) einen Befehlsrücklagespeicher aufweist, in dem bereits ausgeführte Befehle oder fortlaufend eingespeicherte und übersprungene Befehlsworte verbleiben, dessen Inhalt ein zweiter Zeiger in einem zweiten Zeigerregister (BP, BPV) jeweils angibt, und wobei in der Schaltungsanordnung jeweils bei Vorliegen eines Verzweigungsbefehles aus daraus resultierenden Sprungweitensignalen (OPRV6-1) in Summierwerken (SUA, SUB, SUC, SUD) mit dem Ladezeiger und dem zweiten Zeiger Summensignale gebildet sind, die in einer Verzweigungssteuerschaltung (BRCALV, BRCHL) derart verknüpft sind, daß jeweils dann, wenn die Verzweigungsadresse auf den vorausgeladenen Pufferspeicher (IBUF) oder in den Befehlsrücklagespeicher verweist, die Verzweigungsadresse die Pufferleseadresse ist und andernfalls ein Anfangswert in das Ladezeigerregister (AP, APV) und in das zweite Zeigerregister (BP, BPV) gestellt wird, dadurch gekennzeichnet, daß mindestens die zur Befehlspufferspeicheradressierung notwendigen Adreßstellen des Ladezeigers (FA) über eine Adreßpipellne (APL) auf den Befehlspufferspeicher (IBUF) geführt werden, wobei die Kapazität der Adreßpipeline der Zugriffszeit des Hauptspeichers (MEM) entsprechend bemessen ist und von der eine Befehlswortanzahl (IFPV3,2) der in der Adreßpipeline (APL) jeweils vorhandenen Befehle einer Vollständigkeitsprüfschaltung (ILCL) zugeführt ist, deren Ausgangssignal (ILCV) jeweils erst dann, wenn der von der Befehlsadresse adressierte Befehl im Befehlspufferspeicher (IBUF) vollständig verfügbar ist, das Befehlszählwerk (PCU) zur Inkrementierung der Befehlsadresse um eine jeweilige Befehlslänge ansteuert.

15. Schaltungsanordnung nach Anspruch 14, dadurch gekennzeichnet, daß die Befehlsadresse (PCV7-2) mit dem Ladezeiger (FA) und mit dem zweiten Zeiger in jeweils einem ersten Summierwerk (SUA, SUB) subtrahiert werden und die Summen in jeweils einem zweiten Summierwerk (SUC, SUD) mit einer Sprungweite (OPRV6-1) eines Verzweigungsbefehles und mit einer Korrektur-Eins addiert werden und die Summensignale in einer Verzweigungssteuerschaltung (BRCALV, BRCHL) derart verknüpft sind, daß jeweils dann, wenn die Summierwerke einen Überlauf (SUC7, SUD7) oder das Ladezeigersummierwerk (SUC) ein Nullergebnis (SUCZ) zeigt, die Verzweigungsadresse die Pufferleseadresse ist, und andernfalls die Verzweigungsadresse in das Ladezeigerregister (AP, APV) und das zweite Zeigerregister (BP, BPV) und das Befehlszählwerk (PCU) eingeschrieben wird und vom Ladezeigerregister (AP, APV) dem Hauptspeicher (MEM) und der Adreßpipeline (APL) zugeführt ist.

16. Schaltungsanordnung nach Anspruch 14 oder 15, dadurch gekennzeichnet, daß der Befehlspufferspeicher zyklisch geladen wird, indem das Ladezeigerregister (AP, APV) zusammen mit dem Ladezeigeraddierer (CTA) sowie das zweite Zeigerregister (BP, BPV) zusammen mit einem Rückzeigeraddierer (CTB) modulo einer Maximalkapazität, z.B. von 64 Halbworten, des Befehlspufferspeichers (IBUF) betrieben werden und jeweils vor der Erhöhung des Ladezeigers der Ladezeiger (FA) und eine Korrektur – Eins von dem zweiten Zeiger in einem dritten Summierwerk (SUE) subtrahiert werden und nur dann, wenn dessen Null – Ausgang das Erreichen der Maximalkapazität (CAFULV) signalisiert, auch der zweite Zeiger über den Rückzeigeraddierer (CTB) erhöht wird.

17. Schaltungsanordnung nach Anspruch 14, dadurch gekennzeichnet, daß die Vorauslade – wortzahl eine bestimmte Zahl, z.B. acht, ist oder eine durch ein Vorausladebefehlskriterium (OPLD) vorgebbare Vorausladewortzahl (OPRV3 – 0) ist, die über einen Multiplexer (MPXC), von dem Vorausladebefehlskriterium (OPLD) gesteuert, dem zweiten Summierwerk (SUC) des Ladezeigers zugeführt ist, wobei dessen Überlaufsignal (SUC7) in einer Lade – befehlsendschaltung (FENDL) derart ausgewertet ist, daß ein Laden des Befehlspufferspeichers (IBUF) bis zum Auftreten des genannten Überlaufsignales (SUC7) erfolgt, worauf das Lesen und die Ausführung des nächsten von der Befehlsadresse bezeichneten Befehles erfolgt.

18. Schaltungsanordnung nach Anspruch 14, dadurch gekennzeichnet, daß ein Puffermodus – merker (MODF, MODFV) durch Befehle setz – und löschbar ist und jeweils mit einem Steuersignal eines unverzögerten Sprungbefehles zu löschen ist und daß der Zustand des Puffermodusmerkers (MODF, MODFV) der Verzweigungssteuerschaltung (BRCALV, BRCHL) zugeführt ist, die bei dessen Gesetztsein bei verzögerten Vorwärtssprüngen mit einer Befehlslänge von einem Halbwort stets das Sprungziel als im Pufferspeicher erreichbar signalisiert.

19. Schaltungsanordnung nach einem der Ansprüche 14 bis 18, dadurch gekennzeichnet, daß in den Befehlspufferspeicher (IBUF) mit der Ladezeigeradresse jeweils zwei Halbworte ganzwortadressiert einschreibbar sind und aus ihm mit der Befehlsadresse jeweils drei Halbworte halbwortadressiert auslesbar sind.

20. Schaltungsanordnung nach Anspruch 19, dadurch gekennzeichnet, daß in dem Befehls – entschlüßler (IDEC) jeweils aus dem ersten und ggf. zweiten Befehlshalbwort eine Befehlslänge (ILDV2,1) dekodiert ist, welche der Vollständigkeitsprüfschaltung (ILCL) zugeführt ist und die dort derart ausgewertet ist, daß dann wenn mindestens zwei Worte verfügbar sind oder ein Wort verfügbar ist und der Befehl kein verzögerter Sprungbefehl ist und der Befehl entweder nur ein Halbwort umfaßt oder, falls er zwei Halbworte umfaßt, das erste Halbwort an einem Wortanfang plaziert ist, wobei die Lage des ersten Befehlshalbwortes bezüglich der Befehlsganzworte abhängig von der Halbwortadreßstelle (PCV1) des Befehls – zählwerkes (PCU) ausgewertet ist, die Befehlslänge als Inkrement (ILCV) dem Befehls – zählwerk zugeführt wird, da die Vollständigkeit gegeben ist.

21. Schaltungsanordnung nach Anspruch 20, dadurch gekennzeichnet, daß in dem Befehls – entschlüßler (IDEC) ein Verzögerungs – sprungsignal (DLYBRDV, DLYBR) jeweils derart dekodiert ist, daß eine Befehlslänge von drei Halbworten der Vollständigkeitsprüfungs – chaltung (ILCL) signalisiert ist.

22. Schaltungsanordnung nach Anspruch 21, dadurch gekennzeichnet, daß der Befehlspuffer – speicher (IBUF) ein integrierter Schaltkreis oder Teil eines solchen ist, bei dem Zellen (Zm,n) in n Zeilen zu m Spalten von Halb – wortlänge angeordnet sind, von deren Zeilen jeweils zwei benachbarte mit Schreibadreßlei – tungen (WEw) mit den Ausgängen eines Schreibadreßdekoders (DW) verbunden sind, der jeweils gesteuert von einem Schreibsteu – ersignal (IBW) ein Ausgangssignal abgibt, und die mit spaltenweise angeordneten Datenlei – tungen (Dm, DmN) über Schreib – Und – Schaltungen (TE1, TE2) so verbunden sind, daß sie jeweils einen binären Zellzustand in ein bistabiles Speicherelement (V1, V2) über – nehmen, und an dessen Ausgang jeweils drei Ausgangs – Und – Gatter (TL1, TL2, TL3) an – geschlossen sind, die ausgangsseitig spalten – weise in verdrahteten Oder – Schaltungen zu – sammengeführt und so auf Ausgänge geführt sind und deren weitere Eingänge zeilenweise von Lesedekoder – Ausgangsleitungen (REn, REn − 1, REn − 2) eines Lesedekoders (DR) jeweils benachbart zyklisch um eine Zeile bzw. zwei Zeilen versetzt angesteuert sind.

23. Schaltungsanordnung nach Anspruch 22, dadurch gekennzeichnet, daß die Schreib − Und − Schaltungen (TE1, TE2) MOS − FET − Transistoren sind, deren Gateelektrode jeweils mit der Schreibdekoderleitung (WEw) verbunden sind.

24. Schaltungsanordnung nach Anspruch 22 oder 23, dadurch gekennzeichnet, daß das bistabile Speicherelement (V1, V2) eine gegenseitig rückgekoppelte Anordnung zweier Inverter (V1, V2) ist, deren Rückkopplung jeweils schwächer als die Ansteuerung durch die Schreib − Und − Schaltungen (TE1, TE2) sind.

25. Schaltungsanordnung nach Anspruch 22, 23 oder 24, dadurch gekennzeichnet, daß von dem bistabilen Speicherlement (V1, V2) ein MOS − FET − Transistor (TA) gesteuert wird, dessen Ausgang drei weiteren MOS − FET − Transistoren (TL1, TL2, TL3) einerseits zugeführt ist, die die Ausgangs − Und − Gatter bilden und die gatterseitig mit den zugehörigen Lesedekoderausgangsleitungen (REn, REn − 1, REn − 2) zugeordnet verbunden sind und die anderseits spaltenweise untereinander und jeweils mit einem Ladetransistor (TH), der mit einem Lesefreigabesignal (ER) gesteuert ist, spaltenweise zu einer Spannungsleitung ( + U) verbunden, sowie zu den Ausgängen geführt sind.

26. Schaltungsanordnung nach Anspruch 25, dadurch gekennzeichnet, daß an den Ausgängen Register oder Verstärker (OR0, ...OR15; PR0, ...PR15; QR0, ...QR15), die die Ausgangssignale halten bzw. verstärken, für jeweils die drei Halbworte angeordnet sind.

27. Schaltungsanordnung nach Anspruch 22, dadurch gekennzeichnet, daß der Befehlspufferspeicher (IBUF), die Befehlsladeschaltung (PFU) und vorzugsweise die Adreßpipeline (APL) auf einem intergrierten Schaltkreis angeordnet sind.

28. Schaltungsanordnung nach Anspruch 27, dadurch gekennzeichnet, daß der integrierte Schaltkreis in CMOS − Technologie hergestellt ist.

## Claims

1. Method of controlling an instruction buffer memory (IBUF) in a data processing system where said memory is run cyclically as regards its instruction − word capacity, wherein instruction words are loaded in sequence, controlled by a loading indicator (AP, FA) that is always increased by no more than a prescribed difference in relation to an instruction address (BRA) that is constantly to be increased in accordance with one program run − through and in advance of the instruction address, from a main memory (MEM) into the instruction buffer memory (IBUF), from which the instructions, each subsequently addressed by the instruction address (BRA), are supplied to an instruction decoder (IDEC) for execution, and wherein the instruction buffer memory (IBUF) incorporates a reserve instruction memory in which sequentially loaded instruction words that have already been executed or skipped over remain, and in which a branch address that occurs in an instruction − address section of a branching instruction while the program is being run is compared with the particular instruction − address range of whatever instruction is contained, preliminarily loaded and held in reserve, that is in the instruction buffer memory (IBUF), and, if the branch address is in said address range, that addressed instruction is called out of the instruction buffer memory (IBUF) and, if the branch address is outside said instruction − address range, the branch address is sent to the main memory (MEM) and said address range is erased, characterised in that from the loading indicator (FA) at least those address bits necessary for addressing the instruction buffer memory are always supplied to an address pipeline (APL), and from the address pipeline (APL) these same address bits, after a delay that always corresponds to the time during which a memory − access control device (MEMG) executes the memory access procedures in the prescribed address sequence, are supplied in the form of a buffer − memory write address (IBA) to the buffer memory (IBUF), and in that each time the branching address is compared with the address range of the preliminarily loaded instruction words contained in the instruction buffer memory (IBUF), the comparison additionally includes the instruction − word addresses (FA) stored in the address pipeline (APL) and, if the address pipeline (APL) holds an address that corresponds to the branch address, the incrementation of the instruction address by a particular instruction length which is required for addressing the following instruction only takes place when the output signal (ILCV) of a completeness-testing circuit (ILCL) to which the instruction-word number (IFPV3,2) of the particular instructions held in the address pipeline (APL) has been supplied indicates complete availability in the instruction buffer memory of the instruction addressed by the instruction address.

2. Method according to claim 1, characterised in that the address pipeline (APL) is employed for the addresses (FA, RA) both of instruction words to be obtained from the main memory (MEM) and of data words that are to be supplied to a register set (RGST), and characteristics associated with the instruction-word addresses (FA) are also entered into the address pipeline (APL), in accordance with which the presence of instruction-word addresses (FA) in the address pipeline (APL) is taken into consideration during the comparison.

3. Method according to claim 1, characterised in that the loading indicator is compared, before it is increased, with a reserve indicator (BP) that always indicates the farthest instruction word back and, if the comparison results in a buffer-full signal (CAFULV), increases the reserve indicator (BP) by a single 1 at a word-address bit.

4. Method according to one of claims 1 to 3, characterised in that the preliminary loading of the instruction buffer memory (IBUF) is controlled depending on a preliminary-loading instruction in accordance with a number (APRV3-0) of instruction words or instruction half words reported in the preliminary-loading instruction, for which purpose a specific difference (CMPAV) between the instruction address (PCV7-2) and the particular loading-indicator address (APV) is constantly compared with the reported number (OPRV-3) and the resulting preliminary-loading end releases an instruction in the instruction decoder (IDEC) for execution.

5. Method according to claim 4, characterised in that the preliminary-loading instruction is, subject to the control of a compiler, inserted into the program at whatever point is followed by a prescribed number of main-memory data instructions and/or by a program loop that is to be run several times, that is no longer than the size of the reserve buffer memory, and that has a loop-application point downstream of where the loop commences when the loop-application point is inside a prescribed range, e.g. a number of instruction words or instructions.

6. Method according to claims 1 to 3, characterised in that a buffer-mode marker (MODF) can be set and erased in accordance with an instruction and is erased by undelayed skipping instructions such that, when it is set, a branching address of a delayed skipping instruction that is half a word long is not accepted as a new loading indicator and the address range is not erased, whereas the branching address is loaded into the instruction counter such that the accordingly addressed instruction will always be released for decoding once its availability has been established by the buffer being loaded as far as the instruction-counter state.

7. Method according to claim 6, characterised in that the instruction to set the buffer-mode marker (MODF) is always introduced, subject to the control of a compiler, where, in a program loop that is to be run several times and that is no longer than the size of the reserve buffer, instructions for skipping forward to skipping targets inside the loop are contained.

8. Method according to claim 6 or 7, characterised in that the particular state of the buffer-mode marker (MODF) is saved at the beginning of subsidiary programs and interrupt programs and is restored at their end.

9. Method according to any of the preceding claims, characterised in that the various types of instructions have different lengths, ranging, say, from one to three instruction-word components, e.g. half words, that are stored consecutively in the form of instruction words of fixed length, and that before any instruction is executed, first an operation component, which is the first and if necessary the second instruction-word component of the particular instruction, is decoded in relation to instruction length, and complete availability in the instruction buffer memory (IBUF) and if applicable in the address pipeline (APL) of whatever instruction-word components belong to the instruction is determined, and the instruction is not executed until all the instruction word components of the particular instruction are available and have been transferred into the instruction decoder (IDEC), subsequent to which the instruction address is incremented by the length of the instruction.

10. Method according to claim 9, characterised in that when the maximum instruction length is three half words and the pipeline capacity is two whole words, availability is determined by, taking the instruction words in the pipeline into consideration, determining one−word availability and two−word availability and reporting complete availability when there is either at least two−word availability or when there is one−word availability and the instruction comprises less than three half words and the first half word is situated at the beginning of a whole word, which is indicated by a zero at the half−word address place, or the instruction is only half an instruction word long.

11. Method according to claim 9, characterised in that the number of half instruction words that are to be preliminarily loaded is always specified in the preliminary−loading instruction and the number of whole words loaded in accordance therewith into the instruction buffer memory (IBUF) is such that the specified half instruction words can be attained therein.

12. Method according to any of claims 9 to 11, characterised in that one type of instruction is a delayed relative skipping instruction, which always has an instruction downstream of it, whereby their joint instruction length is no more than three half words, and in that complete availability for such a delayed skipping instruction is always considered to have been determined when the three half words are available, subsequent to which the subsidiary instruction always arrives for execution after the skipping instruction, even when a branching has been executed along with the skipping instruction.

13. Method according to any of the preceding claims, characterised in that the main memory (MEM) has a page−by−page organisation that generates an instruction−page error signal when one of the instruction addresses (ADB) supplied to the main memory (MEM) refers to a page that is not currently present in the main memory (MEM), upon which the corresponding instruction address simultaneously present in the address pipeline (APL) is erased and only one instruction is accordingly executed, setting an instruction−page error marker (IPF), in accordance with which any further preliminary loading is discontinued and, if a branching instruction to an instruction address that is not attainable in the instruction buffer memory (IBUF) is executed, the instruction−page error marker (IPF) is erased and, if the last available instruction that is to be executed is not a branching instruction and the instruction−page error marker (IPF) is still set, branching into instruction−page error processing occurs.

14. Data processing system circuitry, comprising an instruction buffer memory (IBUF) into which instruction words are loaded from a main memory (MEM) in a manner controlled by a loading indicator (FA) in a loading−indicator register (AP, APV) which is constantly being increased in a loading−indicator adder (CTA) by a prescribed maximum number of preliminary−loading words in advance of an instruction address, and out of the instruction buffer memory (IBUF) of which, addressed by the incremented instruction address continuously controlled in an instruction counter (PCU), instructions are read while a program runs and are transferred into an instruction decoder (IDEC) for execution, the instruction buffer memory (IBUF) incorporating a reserve instruction memory wherein instructions that have already been executed or instruction words that have been continuously stored and skipped over remain, the contents of said reserve memory respectively being indicated by a second indicator in a second indicator register (BP, BPV), and, each tame there is a branching instruction in the circuitry, sum signals are produced from accordingly resulting skip−width signals (OPRV6−1) in summing stages (SUA, SUB, SUC, SUD) along with the loading indicator and the second indicator, said sum signals so being combined in a branching control circuit (BRCALV, BRCHL) that whenever the branching address is indicated to be in the preliminarily loaded instruction memory (IBUF) or in the reserve instruction memory, the branching is the buffer read address and if not an initial value is loaded into the loading−indicator register (AP, APV) and into the second indicator register (BP, BPV), characterised in that at least the address bits of the loading indicator (FA) that are necessary for addressing the instruction buffer memory are sent down an address pipeline (APL) to the instruction buffer memory (IBUF), the capacity of the address pipeline being dimensioned in accordance with the access time of the main memory (MEM) and from it a number of instruction words (IFPV3,2) of the particular instructions present in the address pipeline (APL) being supplied to a completeness−testing circuit (ILCL) whose output signal (ILCV) only triggers the instruction counter (PCU) to increment the instruction address by a particular instruction length once there is complete availability of the instruction addressed by the instruction address in the instruction buffer memory (IBUF).

**15.** Circuitry according to claim 14, characterised in that the instruction address (PCV7 − 2) along with the loading indicator (FA) and with the second indicator are subtracted in a respective first summer stage (SUA, SUB) and in a respective second summing stage (SUC, SUD) the sums are added along with a skipping width (OPRV6 − 1) of a branching instruction and with a corrective 1 and the summing signals are so combined in a branching control circuit (BRCALV, BRCHL) that whenever the summing stages indicate an overflow (SUC7, SUD7) or the loading − indicator summing stage (SUC) indicates a zero result (SUCZ), the branching address is the buffer − read address and otherwise the branching address is written into the loading − indicator register (AP, APV) and the second indicator register (BP, BPV) and the instruction counter (PCU) and supplied by the loading − indicator register (AP, APV) to the main memory (MEM) and the address pipeline (APL).

**16.** Circuitry according to claim 14 or 15, characterised in that the instruction buffer memory is cyclically loaded by operating the loading − indicator register (AP, APV) along with the loading − indicator adder (CTA) and the second loading register (BP, BPV) along with a return adder (CTB) modulo to determine a maximum capacity, e.g. 64 half words, of the instruction buffer memory (IBUF), and the loading indicator (FA) and a corrective 1 from the second indicator are always subtracted in a third summer (SUE) before the loading indicator is increased, and only when its zero output signals that maximum capacity (CAFULV) has been attained, is the second indicator also increased by way of the return − indicator adder (CTB).

**17.** Circuitry according to claim 14, characterised in that the number of preliminary − loading words is a particular number, e.g. eight, or is a number (OPRV3 − 0) that can be prescribed by a preliminary − loading instruction criterion (OPLD), which number is supplied to the second summer (SUC) of the loading indicator via a multiplexer (MPXC) controlled by the preliminary − loading instruction criterion (OPLD), the overflow signal (SUC7) of the second summer stage being evaluated in a loading instruction transmission circuit (FENDL) in such a way that the instruction buffer memory (IBUF) is loaded until said overflow signal (SUC7) occurs, whereupon the next instruction designated by the instruction address is read and executed.

**18.** Circuitry according to claim 14, characterised in that a buffer mode marker (MODF, MODFV) can be set and erased by instructions and can be erased by a control signal of an undelayed skipping instruction, and in that the state of the buffer mode marker (MODF, MODFV) is supplied to the branching control circuit (BRCALV, BRCHL), which, when it is set and when the forward skips are delayed by an instruction length of half a word, always signals that the skipping target is attainable in the buffer memory.

**19.** Circuitry according to any of claims 14 to 18, characterised in that in each case two half words, addressed in the form of whole words, can be written into the instruction buffer memory (IBUF) with the loading − indicator address, and for reading out, with the instruction address, three half words, addressed in the form of half words.

**20.** Circuitry according to claim 19, characterised in that the instruction decoder (IDEC) decodes an instruction length (ILDV2,1) from the first and, if applicable, from the second instruction half word, and supplies the decoded instruction length to the completeness − testing circuit (ILCL), where same is evaluated such that the completeness of an instruction is always considered as given when at least two words are available or when one word is available and the instruction is not a delayed skipping instruction and the instruction either comprises only one half word or, if it comprises two half words, the first half word is situated at the beginning of a word, and the position of the first half instruction word in relation to the whole instruction word is evaluated depending on the half − word address place (PCV1) of the instruction counter (PCU), and, when there is completeness, the instruction length is supplied as an increment (ILCV) to the instruction counter.

**21.** Circuitry according to claim 20, characterised in that the instruction decoder (IDEC) decodes a respective delay skipping signal (DLYBRDV, DLYBR) such that an instruction length of three half words is signalled to the completeness − testing circuit (ILCL).

16

**22.** Circuitry according to claim 21, characterised in that the instruction buffer memory (IBUF) is an integrated circuit or part of such a circuit, in which cells (Zm,n) are arrayed in n lines to m columns of the length of half a word, wherein each pair of adjacent lines is connected by write−address lines (WEw) to the output terminals of a write−address decoder (DW), which, in each case subject to the control of a write−control signal (IBW), emits an output signal, and are connected to data lanes (Dm, DmN) which are arranged column by column by way of write−AND circuits (TE1, TE2) such that they accept a binary cell state in a bistable memory component (V1, V2), and to each output terminal of which three output−AND gates (TL1, TL2, TL3) are connected that at the output end are combined column by column into wired OR circuits and accordingly supplied to output terminals, and their other inputs are activated line−by−line by read−decoder output lines (REn, REn−1, REn−2) of a read decoder (DR) in each case adjacently cyclically activated and displaced by one or two lines.

**23.** Circuitry according to claim 22, characterised in that the write−AND circuits (TE1, TE2) are MOS−FETs with their gate electrodes connected in each case to the write decoder line (WEw).

**24.** Circuitry according to claim 22 or 23, characterised in that the bistable memory component (V1, V2) is a mutually feedbacked system of two inverters (V1, V2) with feedbacks that are weaker than the activation by the write−AND circuits (TE1, TE2).

**25.** Circuitry according to claim 22, 23 or 24, characterised in that a MOS−FET (TA) is controlled by the bistable memory component (V1, V2), three other MOS−FETs (TL1, TL2, TL3) are on the one hand supplied to the output terminal of the first MOS−FET, create the output−AND gates, are assigned and connected at the gate end to the associated read−decoder output lines (REn, REn−1, REn−2), and are on the other hand connected to one another column−by−column and each connected column by column by means of a loading transistor (TH) that is controlled by a read−release signal (ER) to a voltage line (+U) and lead to the output terminals.

**26.** Circuitry according to claim 25, characterised in that registers or amplifiers (OR0, ...0R15; PR0, ...PR15; QR0, ...QR15) that respectively hold or amplify the output signals are positioned at the output terminals for every three half words.

**27.** Circuitry according to claim 22, characterised in that the instruction buffer memory (IBUF), the instruction−loading circuit (PFU) and preferably the address pipeline (APL) are arranged on an integrated circuit.

**28.** Circuitry according to claim 27, characterised in that the integrated circuit is manufactured in CMOS technology.

**Revendications**

**1.** Procédé de commande d'un tampon d'instructions dans une installation de traitement de données, lequel tampon (IBUF) est exploité en mode cyclique quant à sa capacité de mots d'instruction, des mots d'instructions étant chargés successivement d'une mémoire centrale (MEM) dans le tampon d'instructions (IBUF) par commande à l'aide d'une aiguille de chargement (AP, FA), incrémentée, au maximum, d'une différence prédéfinie par rapport à une adresse d'instruction élevée continuellement en fonction d'un déroulement de programme et sur laquelle elle est en avance, les instructions, adressées ensuite, respectivement, par l'adresse d'instruction, étant conduites du tampon (IBUF) à un décodeur d'instructions (IDEC) aux fins d'exécution, le tampon d'instructions (IBUF) comprenant une mémoire de dépôt d'instructions, dans laquelle des mots d'instruction successivement chargés, déjà exécutés ou sautés, sont déposés, et une adresse de branchement, se présentant dans le déroulement du programme dans une partie adresse d'une instruction de branchement étant comparéee avec un domaine d'adresse respectif, relatif aux mots d'instruction contenus dans le tampon d'instructions IBUF), à savoir: des mots d'instruction préchargés et renvoyés, et si l'adresse de branchement est située dans le domaine d'adresses, qui est appelé du tampon d'instructions (IBUF) par ces instructions adressées, et l'adresse de branchement étant conduite à la mémoire centrale (MEM) si elle est située hors de ce domaine d'adresse, lequel est alors effacé,
caractérisé par le fait
que, tout au moins, les positions adresse nécessaires à l'adressage du tampon d'instructions sont conduites de l'adresse d'indicateur de chargement à une pipe−line d'adresses (APL) et de celle−ci au tampon IBUF), sous forme d'adresse d'écriture de mémoire (IBA), avec un retard correspondant respectivement au temps qu'un dispositif de commande d'accès de mémoire demande pour exécuter les accès dans l'ordre indiqué, et qu'en outre, lors de chaque comparaison de l'adresse de branchement avec le domaine d'adresse des mots d'instruction préchargés, déjà contenus dans le tampon d'instructions (IBUF), les adresses de mots d'instruction (FA), mémorisées dans la pipe‒line d'adresses (APL) sont inclus dans la comparaison, et que, si une adresse, correspondant à l'adresse de branchement se trouve dans la pipe‒line (APL), l'incrémentation de l'adresse d'instruction, nécessaire à l'adressage de l'instruction suivante, n'est effectuée d'une longueur d'instruction respective que quand le signal de sortie (ILCV) d'un circuit de test d'état complet (ILCL), auquel le nombre des mots d'instruction (IFPV3,2) des instructions respectivement contenues dans la pipe‒line d'adresses (APL) est conduit, indique que l'instruction, adressée par l'adresse d'instruction, est entièrement disponible dans le tampon d'instructions.

2. Procédé selon revendication 1,
caractérisé par le fait
que la pipe‒line d'adresses (APL) est utilisée pour les adresses (FA, RA) des mots d'instruction à prélever de la mémoire principale (MEM) tout comme des mots de données à amener à un jeu de registres (RGST), et que les caractéristiques concernant les aux adresses de mots d'instruction (FA) sont amenées aussi dans la pipeline d'adressage (APL), et qu'en dépendance de celles‒ci, la présence d'adresses de mots d'instruction (FA) dans la pipe‒line d'adresses (APL) est prise en considération lors de la comparaison.

3. Procédé selon revendication 1,
caractérisé par le fait
que l'adresse indicatrice de chargement est comparée, avant chacune de ses élévations, avec une aiguille de dépôt (BP), qui désigne le mot d'instruction respectivement le plus reculé et que l'aiguille de dépôt (BP) est augmenté de Un à un emplacement d'adresse de mot si un signal "Tampon plein" (CAFULU) résulte de cette comparaison.

4. Procédé selon l'une des revendications 1 à 3,
caractérisé par le fait
que le préchargement du tampon d'instructions (IBUF) est commandé en dépendance d'une instruction de préchargement, conformément à un nombre (APRV3‒0) de mots d'instruction ou de demi‒mots d'instruction, déclarés dans une instruction, une différence (CMPAV) entre l'adresse d'instruction (PCV7‒2) et l'adresse indicatrice de chargement (APV) respective étant comparée continuellement avec le nombre déclaré (OPRV3‒0) et la fin du préchargement ainsi déterminée libérant, aux fins d'exécution, une instruction en attente dans le décodeur d'instructions (IDEC).

5. Procédé selon revendication 4,
caractérisé par le fait que l'instruction de préchargement, commandée par un compilateur, est insérée dans le programme, à un emplacement suivi d'un nombre prédéfini d'instructions de données de la mémoire centrale et/ou d'une boucle de programme à travailler plusieurs fois, dont la longueur correspondant au maximum à la capacité du tampon de dépôt, et derrière le début de laquelle se trouve un point de départ de la boucle, pour autant que ce point de départ de boucle est situé à l'intérieur d'un domaine prédéfini, par exemple: un nombre de mots d'instruction ou d'instructions, en aval du début de la boucle.

6. Circuit selon les revendications 1 à 3,
caractérisé par le fait
qu'en dépendance d'une instruction, un flag de mode tampon (MODF) peut être placé et effacé et qu'il est effacé par des instructions de saut non retardées, et que, lorsqu'il est placé, une adresse de branchement d'une instruction de saut retardée de longueur de demi‒mot n'est pas acceptée comme nouvelle aiguille de chargement et le domaine d'adresse n'est pas effacé, mais que l'adresse de branchement est chargée dans le compteur d'instructions de sorte que l'instruction ainsi adressée est alors libérée aux fins de décodage si sa disponibilité est constée, à savoir: si le chargement du tampon a été effectué jusqu'à l'état du compteur d'instructions.

7. Procédé selon revendication 6,
caractérisé par le fait
que l'instruction de mise en place du flag de mode tampon (MODF), commandé par un compilateur, est insérée dans le programme, là où, dans une boucle de programme à passer plusieurs fois et dont la longueur correspond, au maximum, à la capacité du tampon de dépôt, des instructions de saut en avant à des destinations de saut à l'intérieur de la boucle sont contenues.

8. Procédé selon revendication 6 ou 7,
caractérisé par le fait

qu'au début de sous – programmes et de pro – grammes d'interruption, l'état respectif du flag de mode tampon (MODF) est sauvegardé et restauré à la fin de ceux – ci.

9. Procédé selon l'une des revendications pré – cédentes,
caractérisé par le fait
que les instructions de différents genres pré – sentent une longueur d'instruction différente de, par exemple, une à trois parties de mot d'instruction, par exemple: de demi – mots, qui sont mémorisés, se faisant suite, sous forme de mots d'instruction de longueur fixe, et que, tout d'abord, avant chaque exécution d'ins – truction, une partie d'opération, qui est la pre – mière ou la deuxième partie de mot de l'ins – truction en question, est décodée en ce qui concerne la longueur d'instruction, et une dis – ponibilité complète des parties de mots ap – partenant respectivement à l'instruction est détectée dans le tampon d'instructions (IBUF) et, le cas échéant, dans la pipe – line d'adres – ses (APL), et que l'instruction est alors exé – cutée que si toutes les parties de mots de l'instruction en question sont disponibles et ont été transférés dans le décodeur d'instructions (IDEC), ce après quoi l'adresse d'instruction est incrémentée de la longueur d'instruction.

10. Procédé selon revendication 9,
caractérisé par le fait
que, lors d'une longueur d'instruction maxi – male de trois demi – mots et d'une capacité depipe – line de deux mots entiers, la décou – verte de la disponibilité est effectuée de sorte que, compte tenu des mots d'instructions se trouvant dans la pipe – line, une disponibilité de mot unique ou de deux mots est décou – verte et que la disponibilité complète est alors respectivement déclarée, s'il y a au moins disponibilité de deux mots ou bien s'il y a disponibilité de mot unique et que l'instruction comprend moins de trois demi – mots et que le premier demi – mot est placé à un début de mot entier, ce qui est signalisé par un zéro sur l'emplacement d'adresse de demi – mot, ou que la longueur d'instruction ne comprend qu'un demi – mot d'instruction.

11. Procédé selon revendication 9,
caractérisé par le fait
que, dans l'instruction de préchargement, le nombre des demi – mots d'instruction à pré – charger est respectivement spécifié et qu'en conséquence un tel nombre de mots entiers est chargé dans le tampon d'instructions (IBUF) de sorte que les demi – mots d'ins –

tructions spécifiés s'y trouvent accessibles.

12. Procédé selon l'une des revendication 9 à 11,
caractérisé
par le fait
que l'un des genres d'instructions est une instruction de saut relative, retardée, suivie d'une instruction, leurs longueurs d'instruction comportant, ensemble, trois demi – mots au maxi – mum, et que, pour une telle instruction de saut retardée, la disponibilité complète est toujours considérée comme étant donnée quand les trois demi – mots sont disponibles, ce à la suite de quoi l'instruction suivante est toujours exécutée après l'instruction de saut, même quand un branchement est exécuté avec l'instruction de saut.

13. Procédé selon l'une des rvendications précé – dentes,
caractérisé par le fait
que la mémoire centrale (MEM) présente une organisation de pages, par laquelle un signal d'erreur de page d'instruction est généré si l'une des adresse d'instruction (ADB), condui – tes à la mémoire centrale (MEM), renvoie à une page non existante actuellement dans la mémoire centrale (MEM), ce par quoi l'adresse d'instruction correspondante, simultanément contenue dans la pipe – line d'adresses (APL), est effacée, une exécution de l'instruc – tion n'ayant lieu que conformément à ceci, ce par quoi un flag d'erreur de page d'instruction (IPF) est placé, en dépendance duquel une poursuite du préchargement est stoppée et, si une instruction de branchement est exécutée à une adresse d'instruction non accessible dans le tampon d'instructions (IBUF), le flag d'erreur de page d'instruction (IPF) est effacé et, si la dernière adresse à exécuter, disponible n'est pas une instruction de branchement et le flag d'erreur de page d'instruction (IPF) est encore placé, un branchement a lieu dans un traite – ment d'erreur de page d'instruction.

14. Circuit avec un tampon d'instructions (IBUF) dans une installation de traitement des don – nées, dans lequel des mots d'instruction en provenance d'une mémoire centrale (MEM) sont chargés, par commande à l'aide d'une aiguille de chargement (FA) dans un registre d'aiguille de chargement (AP, APV), qui est continuellement incrémenté dans un addition – neur d'aiguille de chargement (CTA), en avance, d'un nombre maximal de mots de chargement prédéfini, sur une adresse d'ins – truction, et duquel tampon d'instructions (IBUF), par adressage de l'adresse d'instruc –

tion incrémentée continuellement par commande dans un compteur d'adresses (PCU), des instructions sont extraites dans un déroulement de programme et transférées dans un décodeur d'instructions (IDEC) aux fins d'exécution, le tampon d'instructions (IBUF) présentant une mémoire de dépôt d'instructions, dans laquelle des instructions déjà exécutées ou mémorisées continuellement et des mots d'instruction sautés sont conservés, une seconde aiguille, dans un second registre d'aiguille (BP, BPV) indiquant le contenu respectiv, et des signaux sommateurs étant formés, dans des sommateurs (SUA, SUB, SUC, SUD) avec l'aiguille de chargement et la seconde aiguille, lors de la présence d'une instruction de branchement dans le circuit, à partir de signaux de largeur de saut (OPRV6 − 1) en résultant, les signaux sommateurs étant enchaînés dans un circuit de branchement (BRCALV, BRCHL) de sorte que, respectivement, lorsque l'adresse de branchement renvoie au tampon d'instructions (IBUF) préchargé ou à la mémoire de dépôt d'instructions, l'adresse de branchement est l'adresse de lecture du tampon, ou, sinon, une valeur initiale est placée dans le registre d'aiguille de chargement (AP, APV) et dans le deuxième registre d'aiguille (BP, BPV),
caractérisé par le fait
que au moins les positions d'adresse de l'aiguille de chargement (FA) nécessaires à l'adressage du tampon d'instructions sont conduites au tampon d'instructions (IBUF), par l'intermédiaire d'une pipe − line d'adresses (APL), dont la capacité est dimensionnée conformément au temps d'accès de la mémoire centrale (MEM), et de laquelle un nombre de mots d'instruction, respectivement présent, est conduit à un circuit de test d'état complet (ILCL) , dont les signaux de sortie (ILCV) n'excitent le compteur d'adresses (PCU) aux fins d'incrémentation de l'adresse d'instruction d'une longueur d'instruction respective, que si l'instruction, adressée dans le tampon d'instructions (IBUF) est complètement disponible.

15. Circuit selon revendication 14,
caractérisé par le fait
que les adresses d'instruction (PCV7 − 2) sont soustraites, avec l'aiguille de chargement (FA) et avec la deuxième aiguille, respectivement dans un premier sommateur (SUA, SUB) et que les sommes sont additionnées respectivement dans un deuxième accumulateur (SUC, SUD) avec uen largeur de saut (OPRV6 − 1) d'une instruction de branchement et un Un de correction, et que les signaux sommateurs sont enchaînés dans un circuit de commande de branchement (BRCALV, BRCHL) de sorte que, chaque fois que les sommateurs indiquent un dépassement (SUC7, SUD7) ou que le sommateur d'aiguille de chargement (SUC) indique un résultat zéro (SUCZ), l'adresse de branchement est l'adresse de lecture du tampon, et, sinon, que l'adresse de branchement est inscrite dans le registre d'aiguille de chargement (AP, APV) et le deuxième registre d'aiguille (BP, BPV) et le compteur d'instructions (PCU) et qu'elle est conduite du registre d'aiguille de chargement (AP, APV) à la mémoire centrale (MEM) et à la pipe − line d'adresses (APL).

16. Circuit selon revendication 14 ou 15,
caractérisé par le fait
que le tampon d'instructions est chargé cycliquement, le registre d'aiguille de chargement (AP, APV) étant commandé avec l'additionneur d'aiguille de chargement (CTA), ainsi que le deuxième registre d'aiguille (BP, BPV) avec un additionneur d'aiguille de limite arrière (CTB) module d'une capacité maximale , par exemple 64 demi − mots, du tampon d'instructions (IBUF), et que, avant chaque incrémentation de l'aiguille de chargement, l'aiguille de chargement (FA) et un Un de correction sont soustraits de la seconde aiguille, dans un troisième sommateur (SUE), et que ce n'est que si la sortie zéro de celui − ci signale que la capacité maximale (CAFULV) est atteinte, que la deuxième aiguille est aussi incrémentée par l'intermédiaire de l'additionneur d'aiguille de limite arrière (CTB).

17. Circuit selon revendication 14,
caractérisé par le fait
que le nombre de mots de préchargement est un nombre défini, par exemple huit, ou un nombre de mots de préchargement prédéfinissable (OPRV3 − 0) par un critère d'instruction de préchargement (OPLD), lequel nombre, commandé par le critère d'instruction de préchargement (OPLD), est conduit, par l'intermédiaire d'un multiplexeur (MPXC), au deuxième sommateur (SUC) de l'aiguille de chargement, le signal de dépassement (SUC7) étant évalué dans un circuit d'émission d'instructions de chargement (FENDL) de sorte qu'un chargement du tampon d'instructions (IBUF) est effectué jusqu'à l'apparition du dit signal de dépassement (SUC7), ce après quoi la lecture et l'exécution de l'instruction suivante, désignée par l'adresse d'instruction, est effectuée.

**18.** Circuit selon revendication 14,
caractérisé par le fait
qu'un flag de mode tampon (MODF, MODFV) peut être placé et effacé par instruction et est effacé avec un signal de commande d'une instruction de saut non retardée, et que l'état du flag de mode tampon (MODF, MODFV) est conduit au circuit de commande de branche‑ment (BRCALV, BRCHL), qui, lors de sa mise en place lors de sauts en avant retardés avec longueur d'instruction d'un demi‑mot, signale toujours la destination de saut comme étant accessible dans le tampon.

**19.** Circuit selon l'un des revendications 14 à 18,
caractérisé par le fait
que, dans le tampon d'instructions (IBUF), avec l'adresse d'aiguille de chargement, deux demi‑mots peuvent, chaque fois, être inscrits, adressés en mots entiers, et que trois demi‑mots peuvent en être extraits, adressés en demi‑mots.

**20.** Circuit selon revendication 19,
caractérisé par le fait
que, dans le décodeur d'instructions (IDEC), qu'une longueur d'instruction (ILDV2,1) est décodée, respectivement à partir du premier ou, le cas échéant, du deuxième demi‑mot d'instruction, laquelle longueur d'instruction est conduite au circuit de test d'état complet (ILCL) et y est évaluée de sorte que,
si au moins deux mots sont disponibles ou qu'un mot est disponible et si l'instruction n'est pas une instruction de saut retardée et qu'elle comprend ou bien seulement un demi‑mot ou, si elle comprend deux demi‑mots, que le premier demi‑mot soit placé à un début de mot, la position du premier demi‑mot d'ins‑truction, en ce qui concerne les mots entiers d'instruction, dépendant de la position d'adre‑se de demi‑mot (PCV1) du compteur d'ins‑tructions (PCU),
la longueur d'instruction est conduite au compteur d'instructions en tant qu'incrément, du fait qu'il y a alors état complet.

**21.** Circuit selon revendication 20,
caractérisé par le fait
que, dans le décodeur d'instructions (IDEC), un signal de sautde retard (DLYBRDV, DLYBR) est respectivement décodée de sorte qu'une longueur d'instruction de trois demi‑mots du circuit de test d'état complet (ILCL) est signa‑lisée.

**22.** Circuit selon revendication 21,
caractérisé par le fait

que le tampon d'instructions (IBUF) est un circuit intégré ou une partie d'un tel circuit, dans le cadre duquel des cellules (Zm,n) sont disposées en n lignes, en m colonnes de lon‑gueur de demi‑mots, deux lignes voisines étant, respectivement, reliées, avec des lignes d'adresse d'écriture (WEw), aux sorties d'un décodeur d'adresse d'écriture (DW), qui, commandé par un signal de commande d'écriture (IBW), lance un signal de sortie, et reliées avec des lignes de données (Dm, DmN), par l'intermédiaire de circuits ET d'écriture (TE1, TE2), de sorte qu'elles ac‑ceptent, respectivement, un état de cellule bi‑naire dans un élément de mémoire bistable (V1, V2), et que trois portes ET (TL1, TL2, TL3) sont raccordées à sa sortie, lesquelles sont réunies, côté sortie, colonne par colonne, en circuits OU câblées, et conduites ainsi aux sorties, et que leurs autres entrées sont exci‑tées, ligne par ligne, par des lignes de sortie (REn, REn‑1, REn‑2) d'un décodeur de lecture (DR), étant décalées, cycliquement, d'une ligne ou de deux lignes.

**23.** Circuit selon revendication 22 ou 23,
caractérisé par le fait
que les circuits ET d'écriture (TE1, TE2) sont des transistors MOS‑FET, dont les électrodes de porte sont respectivement reliées à la ligne du décodeur d'écriture (WEw).

**24.** Circuit selon revendication 22 ou 23,
caractérisé par le fait
que l'élément de mémoire bistable (V1, V2) est un circuit à contre‑réaction de deux inver‑seurs (V1, V2), dont la contre‑réaction est respectivement plus faible que l'excitation par les circuits ET d'écriture (TE1, TE2).

**25.** Circuit selon revendications 22, 23 ou 24,
caractérisé par le fait
que, de l'élément de commande bistable (V1, V2), un transistor MOS‑FET (TA) est com‑mandé, dont la sortie est conduite à trois au‑tres transistors MOS‑FET (TL1, TL2, TL3), qui forment les portes ET de sortie et sont reliés, côté porte, aux lignes de sortie du dé‑codeur de lecture (REn, REn‑1, REn‑2) correspondantes, et sont reliés entre eux, co‑lonne par colonne et, respectivement, avec un transistor de chargement (TH), commandé par un signal de libération de lecture (ER), et for‑ment, colonne par colonne une ligne de ten‑sion (+U), et sont conduits aux sorties.

**26.** Circuit selon revendication 25,
caractérisé par le fait

que des registres ou des amplificateurs (OR0, ...OR15; PR0, ...PR15; QR0, ...QR15), qui, respectivement, arrêtent ou amplifient les si‐gnaux de sortie, sont disposés aux sorties, respectivement, pour les trois demi‐mots.

27. Circuit selon revendication 22,
caractérisé par le fait
que le tampon d'instructions (IBUF), le circuit de chargement d'instructions (PFU) et, de préférence, la pipe‐line d'adresses (APL) sont disposés sur un circuit intégré.

28. Circuit selon revendication 27,
caractérisé par le fait
que le circuit de commutation intégré est exécuté selon la technologie CMOS.

Fig. 1

Fig. 2

Fig. 5

Fig. 3

Fig. 4